# EUROPEAN PATENT APPLICATION

(11) **EP 3 487 212 A1**
(43) Date of publication of application: **22.05.2019**
(21) Application number: 17827675.4
(22) Date of filing: 12.07.2017
(51) Int. Cl.: H04W 28/06, H04W 24/10, H04W 72/04, H04W 72/14

(54) **USER TERMINAL AND WIRELESS COMMUNICATIONS METHOD**

(30) Priority: 12.07.2016 JP 2016137918
(71) Applicant: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN)
(74) Representative: Hoffmann Eitle
(86) International application number: PCT/JP2017/025444
(87) International publication number: WO 2018/012549

(57) **Abstract**

In order that communication is performed properly even in the case where a shortened TTI and/or processing time reduction is introduced, a user terminal for communicating with a cell at least using a shortened TTI whose period of time is shorter than a subframe, has a transmission section for performing transmission of aperiodic channel state information using the shortened TTI and transmission of periodic channel state information using the shortened TTI and/or subframe, and a control section that controls transmission by selecting one of the aperiodic channel state information and the periodic channel state information when transmission timing of the aperiodic channel state information and transmission timing of the periodic channel state information overlap in a same shortened TTI at least in a same cell.

## Description

### Technical Field

The present invention relates to a user terminal and radio communication method in the next-generation mobile communication system.

### Background Art

In UMTS (Universal Mobile Telecommunication System) networks, for the purpose of higher data rates, low delay and the like, Long Term Evolution (LTE) has been specified (Non-patent Literature 1). For the purpose of wider bands and higher speed than LTE (also referred to as LTE Rel. 8), LTE Advanced (also referred to as LTE Rel. 10, 11 or 12) has been specified and a successor system (from LTE Rel. 13) has been studied.

In LTE Rel. 10/11, in order to widen the band, Carrier Aggregation (CA) to aggregate a plurality of component carries (CCs) has been introduced. Each CC is configured with a system band of LTE Rel. 8 as one unit. Further, in CA, a plurality of CCs of the same radio base station (eNB: eNodeB) is set for user equipment (UE).

On the other hand, in LTE Rel. 12, Dual Connectivity (DC) has also been introduced, in which a plurality of cell groups (CGs) of different radio base stations is set for the user terminal. Each cell group is configured by at least one cell (CC). In DC, since a plurality of CCs of different radio base stations is aggregated, DC is also referred to as Inter-eNB CA and the like.

When CA is performed, a primary cell (PCell) whose reliability to guarantee connectivity is high and a secondary cell (SCell) that is a subsidiary cell are set for the user terminal.

UE is capable of connecting to PCell first and then adding SCell as needed. PCell is the same cell as a standalone cell that supports RLM (Radio Link Monitoring), SPS (Semi-Persistent Scheduling) and the like. S cell is a cell to be set for UE in addition to PCell.

In an existing LTE system, an uplink signal is mapped to a proper radio resource and transmitted from the user terminal to a radio base station apparatus. Uplink user data is transmitted by using a physical uplink shared channel (PUSCH). Further, uplink control information (UCI) is transmitted by using the PUSCH in the case of being transmitted along with uplink user data and by using a physical uplink control channel (PUCCH) in the case of being transmitted alone.

The uplink control information (UCI) includes receipt confirmation (ACK/NACK) for a physical downlink shared channel (PDSCH), scheduling request, channel state information (CSI) and the like. The channel state information (hereinafter, referred to as CSI) is information based on the instantaneous channel state of downlink and for example, is channel quality information (CQI), precoding matrix indicator (PMI), rank indicator (RI) and the like. This CSI is notified periodically or aperiodically from the user terminal to the radio base station apparatus.

Periodic channel state information (Periodic CSI) is transmitted periodically as CSI by the user terminal based on the period and resource notified from the radio base station. On the other hand, aperiodic channel state information (Aperiodic CSI) is transmitted as CSI by the user terminal in response to triggering from the radio base station apparatus. This triggering (Aperiodic CSI triggering) is included in an uplink scheduling grant (hereinafter, referred to as UL (Uplink) grant) to be transmitted on a physical downlink control channel (PDCCH). The user terminal notifies the aperiodic channel state information (hereinafter, also referred to as A-CSI) by using the PUSCH specified in the UL grant in accordance with the triggering included in the UL grant. Such notification of A-CSI is also referred to as aperiodic channel state information reporting (Aperiodic CSI (CQI/PMI/RI) Reporting).

Further, in the existing system (LTE Rel. 8-12), frequency division duplex (FDD) in which downlink (DL) transmission and uplink (UL) transmission are performed in different frequency bands, and time division duplex (TDD) in which DL transmission and UL transmission are performed in the same frequency band by switching time have been introduced.

In the above-mentioned existing system, a transmission time interval (TTI) applied to DL transmission and UL transmission between the radio base station and the user terminal is set to 1 ms and controlled. The transmission time interval is also referred to as a transfer time interval and the TTI in the LTE system (Rel. 8-12) is also referred to as a subframe length.

### Citation List

### Non-Patent Literature

[Non-Patent Literature 1] 3GPP TS 36.300 "Evolved Universal Terrestrial Radio Access (E-UTRA) and Evolved Universal Terrestrial Radio Access Network (E-UTRAN); Overall description; Stage 2"

### Summary of Invention

### Technical Problem

In the future radio communication systems (for example, 5G, NR), it is conceived that the system is required to actualize various radio communication services so as to satisfy different requirements (for example, ultrahigh speed, large capacity, ultra-low delay and the like) respectively.

For example, in 5G, provision of radio communication services referred to as eMBB (enhanced Mobile Broad Band), IoT (Internet of Things), MTC (Machine Type Communication), M2M (Machine To Machine), URLLC (Ultra Reliable and Low Latency Communications) and the like has been studied. In addition, M2M may be referred to as D2D (Device To Device), V2V (Vehicular To Vehicular) and the like depending on the apparatus that performs communication. In order to satisfy requests for the above-mentioned various communications, designing a new communication access scheme (New RAT (Radio Access Technology)) has been studied.

In order to provide sufficient communication services in the future radio communication system such as this, latency reduction has been studied. For example, performing communication by using a transmission time interval (TTI) (for example, may also be referred to as shortened TTI) obtained by shortening the TTI that is the minimum time unit of scheduling to be less than 1 ms of the existing LTE system (LTE Rel. 8-12) has been studied. Alternatively, processing time reduction by applying a short processing time compared to the existing LTE system has been studied.

However, in the existing LTE system, timing control of communication is performed in units of subframes (1 ms), but it is not specified yet how to control communication when introducing the shortened TTI and/or processing time reduction.

As described above, for example, in the existing LTE system, the reporting operation of the periodic channel state information (P-CSI) and the aperiodic channel state information (A-CSI) is specified. In the case of introducing the shortened TTI and/or processing time reduction, it is problematic how to control transmission and reception of P-CSI and A-CSI. Thus, a control method capable of properly performing communication in the case where communication is performed by using the shortened TTI and/or processing time reduction, is required.

The present invention was made in view of such a respect, and it is one of objects of the invention to provide a user terminal and radio communication method capable of properly performing communication even in the case where the shortened TTI and/or processing time reduction is introduced.

### Solution to Problem

One aspect of the user terminal of the present invention is the user terminal for communicating with a cell at least using a shortened TTI whose period of time is shorter than a subframe, and is characterized by having a transmission section for performing transmission of aperiodic channel state information using the shortened TTI and transmission of periodic channel state information using the shortened TTI and/or subframe, and a control section for controlling transmission by selecting one of the aperiodic channel state information and the periodic channel state information when transmission timing of the aperiodic channel state information and transmission timing of the periodic channel state information overlap in the same shortened TTI at least in the same cell.

### Advantageous Effects of Invention

According to the present invention, it is possible to properly perform communication even in the case where the shortened TTI and/or processing time reduction is introduced.

### Brief Description of Drawings

FIG. 1 is a diagram showing one example of a transmission time interval (TTI) in an existing LTE system (Rel. 8-12).
FIG. 2 is a diagram to explain a normal TTI (ordinary TTI) and shortened TTI.
FIG. 3A and FIG. 3B are diagrams showing configuration examples of the shortened TTI.
FIG. 4A to FIG. 4C are diagrams showing setting examples of the normal TTI and shortened TTI.
FIG. 5 is a diagram showing one example of a transmission method at the time of a collision of P-CSI and A-CSI in the existing LTE system.
FIG. 6A and FIG. 6B are diagrams showing one example of a transmission method of P-CSI and A-CSI in this Embodiment.
FIG. 7 is a diagram showing another example of the transmission method of P-CSI and A-CSI in this Embodiment.
FIG. 8 is a diagram showing another example of the transmission method of P-CSI and A-CSI in this Embodiment.
FIG. 9 is a diagram showing another example of the transmission method of P-CSI and A-CSI in this Embodiment.
FIG. 10 is a diagram showing another example of the transmission method of P-CSI and A-CSI in this Embodiment.
FIG. 11A and FIG. 11B are diagrams showing another example of the transmission method of P-CSI and A-CSI in this Embodiment.
FIG. 12 is a diagram showing another example of the transmission method of P-CSI and A-CSI in this Embodiment.
FIG. 13 is a diagram showing another example of the transmission method of P-CSI and A-CSI in this Embodiment.
FIG. 14 is a diagram showing another example of the transmission method of P-CSI and A-CSI in this Embodiment.
FIG. 15 is a diagram showing another example of the transmission method of P-CSI and A-CSI in this Embodiment.
FIG. 16 is a schematic configuration diagram showing one example of a schematic configuration of a radio communication system according to this Embodiment.
FIG. 17 is a diagram showing one example of an entire configuration of a radio base station according to this Embodiment.
FIG. 18 is a diagram showing one example of a function configuration of the radio base station according to this Embodiment.
FIG. 19 is a diagram showing one example of an entire configuration of a user terminal according to this Embodiment.
FIG. 20 is a diagram showing one example of a function configuration of the user terminal according to this Embodiment.
FIG. 21 is a diagram showing one example of a hardware configuration of a radio base station and a user terminal according to one Embodiment of the present invention.

### Description of Embodiments

As described above, in the future radio communication systems, latency reduction is required and reducing a processing time of transmission and reception of signals compared to the existing LTE system has been studied. As a method of actualizing processing time reduction, it is considered setting a processing time shorter than the processing time in the existing LTE system while controlling communication in units of subframes as in the existing LTE system. Alternatively, as a method of actualizing processing time reduction, it is considered controlling transmission and reception of signals by introducing the shortened TTI whose period of time is shorter than the subframe (1 ms) in the existing LTE system.

In the case of setting a processing time shorter than the processing time in the existing LTE system, a user terminal controls transmission and reception of signals by applying timing earlier than transmission and reception timing of signals defined in the existing LTE system. For example, in the existing system, in the case of receiving a channel state information reporting request (CSI triggering) in a subframe n, aperiodic CSI (A-CSI) is transmitted in a subframe after a predetermined period of time (for example, subframe n + k (k≥4)).

In the case where processing time reduction is set, the user terminal controls so as to perform transmission of A-CSI at timing earlier than the subframe n+k (for example, subframe n+k' (k'<4)). In this case, even when communication is controlled in units of existing subframes, it is possible to reduce the processing time of A-CSI reporting. Further, it is also conceived that the transmission period is set shorter than the existing LTE system also for periodic CSI (P-CSI).

The reduced processing time may be defined beforehand by specifications, or the user terminal may be notified with higher layer signaling and/or physical layer signaling (for example, downlink control channel).

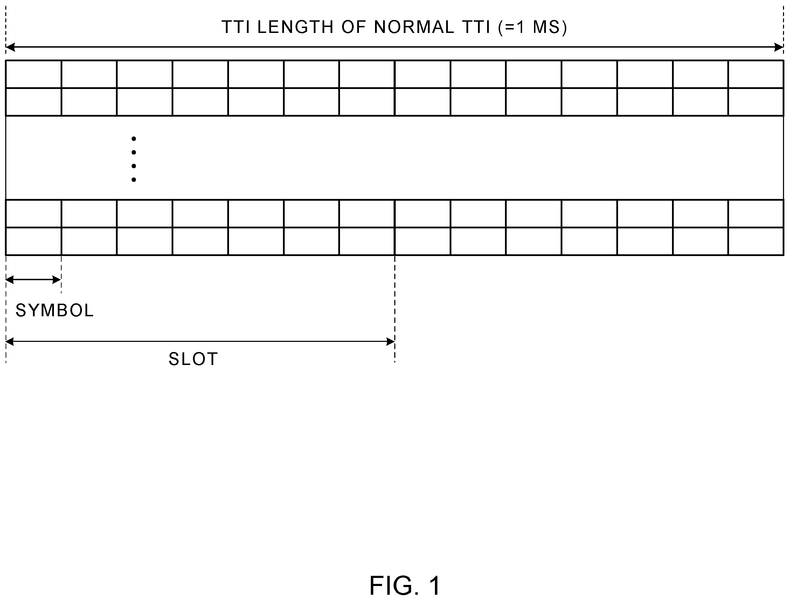

Further, in the case of introducing the shortened TTI whose period of time is shorter than the subframe in the existing LTE system, the user terminal performs transmission and/or reception of signals with the shortened TTI. A normal TTI and shortened TTI will be described below with reference to FIG. 1 to FIG. 4.

FIG. 1 is an explanatory diagram of one example of the transmission time interval (TTI) in the existing system (LTE Rel. 8-12). As shown in FIG. 1, the TTI in LTE Rel. 8-12 (hereinafter, referred to as "normal TTI") has a time length of 1 ms. The normal TTI is also referred to as a subframe and configured by two time slots. The TTI is the transmission time unit of a 1 data packet subjected to channel coding (transport block) and is the processing unit of scheduling, link adaptation and the like.

As shown in FIG. 1, in the case of a normal cyclic prefix (CP) on downlink (DL), the normal TTI is configured by including 14 OFDM (Orthogonal Frequency Division Multiplexing) symbols (7 OFDM symbols per slot). Each OFDM symbol has a time length (symbol length) of 66.7 µs and a normal CP of 4.76 µs is added. The symbol length and subcarrier interval are in a reciprocal relationship, and therefore, in the case of a symbol length of 66.7 µs, the subcarrier interval is 15 kHz.

Further, in the case of a normal cyclic prefix (CP) on uplink (UL), the normal TTI is configured by including 14 SC-FDMA (Single Carrier Frequency Division Multiple Access) symbols (7 SC-FDMA symbols per slot). Each SC-FDMA symbol has a time length (symbol length) of 66.7 µs and a normal CP of 4.76 µs is added. The symbol length and subcarrier interval are in a reciprocal relationship, and therefore, in the case of a symbol length of 66.7 µs, the subcarrier interval is 15 kHz.

In addition, in the case of an enhanced CP, the normal TTI may be configured by including 12 OFDM symbols (or 12 SC-FDMA symbols). In this case, each OFDM symbol (or each SC FDMA symbol) has a time length of 66.7 µs and an enhanced CP of 16.67 µs is added.

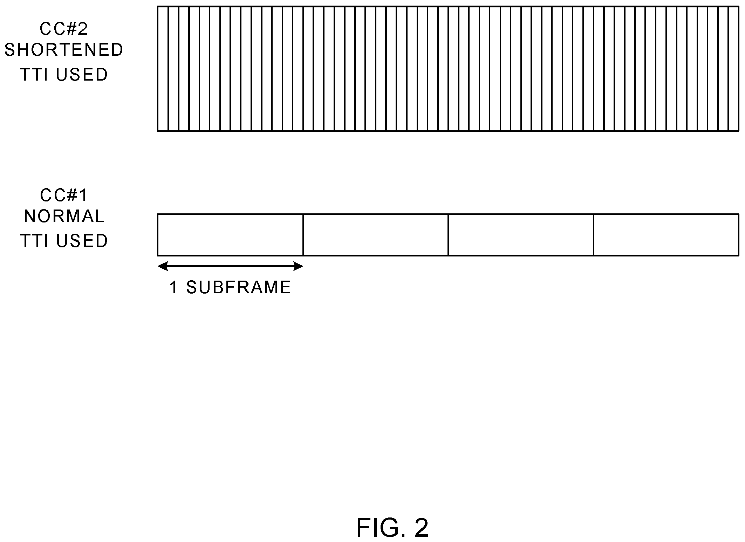

FIG. 2 shows one example in the case of performing communication by using the shortened TTI whose TTI length is shortened to be less than 1 ms. In addition, FIG. 2 shows a cell (CC#1) that uses the normal TTI (1 ms) and a cell (CC#2) that uses the shortened TTI.

In the case of using the shortened TTI, it is considered changing the subcarrier interval from the subcarrier of the normal TTI (for example, increasing the subcarrier interval). In the case of using the TTI whose time length is shorter than the normal TTI (hereinafter, referred to as "shortened TTI"), a temporal margin for the processing (for example, coding, decoding and the like) in the user terminal and radio base station increases, and therefore, it is possible to reduce the processing delay. Further, in the case of using the shortened TTI, it is possible to increase the number of the user terminal capable of being accommodated per unit time (for example, 1 ms). The configuration and the like of the shortened TTI will be specifically described below.

### (Configuration example of shortened TTI)

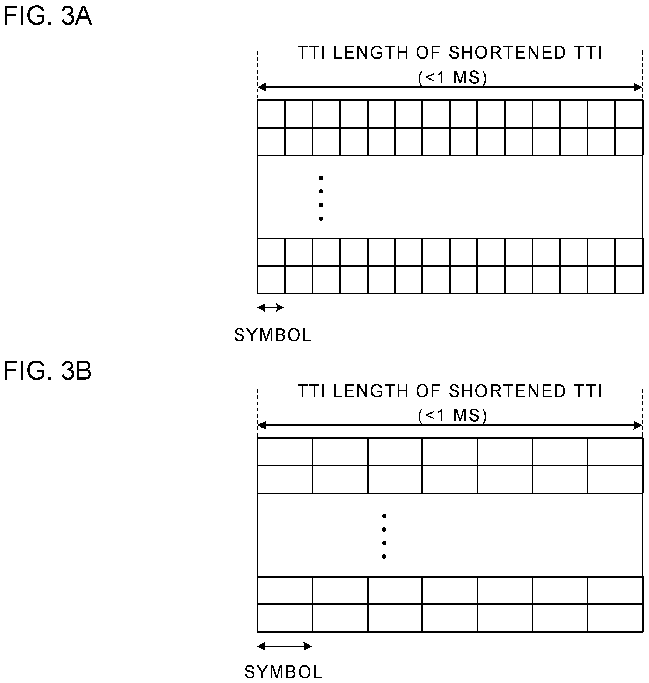

A configuration example of the shortened TTI is described with reference to FIG. 3. As shown in FIG. 3A and FIG. 3B, the shortened TTI has a time length (TTI length) shorter than 1 ms. The shortened TTI may be one or a plurality of TTI lengths whose multiple is 1 ms, for example, such as 0.5 ms, 0.25 ms, 0.2 ms, and 0.1 ms. Alternatively, in the case of the normal CP, the normal TTI includes 14 symbols, and therefore, the shortened TTI may be one or a plurality of TTI lengths that are integer multiples of 1/14 ms, such as 7/14 ms, 4/14 ms, 3/14 ms, 2/14 ms, and 1/14 ms. Further, in the case of the enhanced CP, the normal TTI includes 12 symbols, and therefore, the shortened TTI may be one or a plurality of TTI lengths that are integer multiples of 1/12 ms, such as 6/12 ms, 4/12 ms, 3/12 ms, 2/12 ms, and 1/12 ms.

In addition, in the shortened TTI also, as in the conventional LTE, it is possible to configure whether the normal CP or enhanced CP by higher layer signaling such as broadcast information and RRC signaling. Due to this, it is possible to introduce the shortened TTI while maintaining compatibility (synchronization) with the normal TTI that is 1 ms.

In addition, in FIG. 3A and FIG. 3B, the case of the normal CP is described as one example, but the example is not limited to this. It is essential only that the shortened TTI has a time length shorter than the normal TTI and the configuration such as the number of symbols within the shortened TTI, symbol length, and CP length may be any configuration. Further, an example in which the OFDM symbol is used on DL and the SC-FDMA symbol is used on UL will be described below, but the example is not limited to this.

FIG. 3A is a diagram showing a first configuration example of the shortened TTI. As shown in FIG. 3A, in the first configuration example, the shortened TTI is configured by 14 OFDM symbols (or SC-FDMA symbols), the same number as the normal TTI, and each OFDM symbol (or each SC-FDMA symbol) has a symbol length shorter than the symbol length (= 66.7 µs) of the normal TTI.

As shown in FIG. 3A, in the case of shortening the symbol length while maintaining the number of symbols of the normal TTI, it is also possible to use the physical layer signal configuration (RE allocation and the like) of the normal TTI. Further, in the case of maintaining the number of symbols of the normal TTI, it is possible to include the same amount of information (bit amount) as that of the normal TTI also in the shortened TTI.

Furthermore, the symbol length and subcarrier interval are in a reciprocal relationship, and therefore, in the case of shortening the symbol length as shown in FIG. 3A, the subcarrier interval becomes wider than 15 kHz of the normal TTI. When the subcarrier interval becomes wider, it is possible to effectively prevent interference between channels due to the Doppler shift at the time of the user terminal moving, and transmission quality deterioration due to phase noise of the receiver of the user terminal. Particularly, in a high-frequency band of tens of GHz and the like, by increasing the subcarrier interval, it is possible to effectively prevent transmission quality deterioration.

FIG. 3B is a diagram showing a second configuration example of the shortened TTI. As shown in FIG. 3B, in the second configuration example, the shortened TTI is configured by OFDM symbols (or SC-FDMA symbols) smaller in number than the normal TTI, and each OFDM symbol (each SC-FDMA symbol) has the same symbol length (= 66.7 µs) as that of the normal TTI. In this case, it is possible to configure the shortened TTI in units of symbols in the normal TTI (configuration in which the number of symbols is reduced). For example, it is possible to configure the shortened TTI by using part of symbols of 14 symbols included in one frame. In FIG. 3B, the shortened TTI is configured by 7 OFDM symbols (SC-FDMA symbols), half that of the normal TTI.

As shown in FIG. 3B, in the case of reducing the number of symbols while maintaining the symbol length, it is possible to reduce the amount of information (bit amount) included in the shortened TTI to be smaller than that of the normal TTI. Therefore, the user terminal is capable of performing reception processing (for example, demodulation, decoding and the like) of information included in the shortened TTI in a shorter time than the normal TTI, and of reducing the processing delay. Further, by making the symbol length the same as that in the existing system, it is possible to subject the signal of the shortened TTI and the signal of the normal TTI to frequency multiplexing within the same system band (or carrier, cell, CC), and to maintain compatibility with the normal TTI.

As one example, in frame configuration type 1 (FDD), by using the shortened TTI (sTTI) configured by two symbols and/or one slot in the existing system, it is possible to perform transmission on a downlink control channel (for example, also referred to as sPDCCH) and/or downlink shared channel (for example, also referred to as sPDSCH). Further, in frame configuration type 1 (FDD), by using the shortened TTI configured by at least one of two symbols, four symbols, and one slot, it is possible to perform transmission on an uplink control channel (for example, also referred to as sPUCCH) and/or uplink shared channel (for example, also referred to as sPUSCH). Alternatively, in frame configuration type 2 (TDD), by using the shortened TTI configured by one slot, it is possible to perform transmission on at least one of sPDCCH, sPDSCH, sPUCCH and sPUSCH.

### (Setting example of shortened TTI)

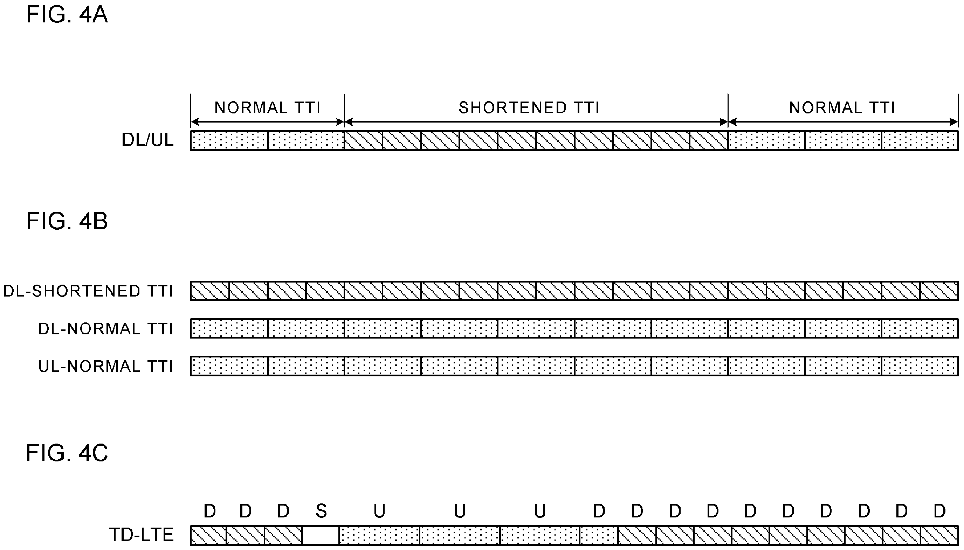

A setting example of the shortened TTI will be described. In the case of applying the shortened TTI, it is also possible to make a configuration where both the normal TTI and the shortened TTI are set for the user terminal so as to have compatibility with the existing system (LTE Rel. 8-12). FIG. 4A to FIG. 4C are diagrams showing setting examples of the normal TTI and shortened TTI. In addition, FIG. 4A to 4C are merely exemplary and the setting examples are not limited to those.

FIG. 4A is a diagram showing a first setting example of the shortened TTI. As shown in FIG. 4A, the normal TTI and shortened TTI may be temporally mixed within the same component carrier (CC) (frequency domain). Specifically, the shortened TTI may be set in a particular subframe of the same CC (or particular radio frame). For example, in FIG. 4A, the shortened TTI is set in five contiguous subframes within the same CC, and the normal TTI is set in other subframes. For example, as a particular subframe, there may be a subframe in which it is possible to set an MBSFN subframe, or a subframe including (or not including) a particular signal such as MIB and synchronization channel. In addition, the number of subframes in which the shortened TTI is set and position are not limited to those shown in FIG. 4A.

FIG. 4B is a diagram showing a second setting example of the shortened TTI. As shown in FIG. 4B, Carrier aggregation (CA) or Dual Connectivity (DC) may be performed by aggregating CC of the normal TTI and CC of the shortened TTI. Specifically, the shortened TTI may be set in a particular CC (more specifically, on DL and/or UL of particular CC). For example, in FIG. 4B, the shortened TTI is set on DL of a particular CC and the normal TTI is set on DL and UL of other CCs. In addition, the number of CCs in which the shortened TTI is set and position are not limited to those shown in FIG. 4B.

Further, in the case of CA, the shortened TTI may be set in a particular CC (primary (P) cell or/and secondary (S) cell) of the same radio base station. On the other hand, in the case of DC, the shortened TTI may be set in a particular CC (P cell or/and S cell) within a master cell group (MCG) formed by a first radio base station, or may be set in a particular CC (primary secondary (PS) cell or/and S cell) within a secondary cell group (SCG) formed by a second radio base station.

FIG. 4C is a diagram showing a third setting example of the shortened TTI. As shown in FIG. 4C, the shortened TTI may be set on either DL or UL. For example, in FIG. 4C, the case is shown where the normal TTI is set on UL and the shortened TTI is set on DL in the TDD system.

Further, a particular channel or signal on DL or UL may be assigned (set) to the shortened TTI. For example, the physical uplink control channel (PUCCH) may be assigned to the normal TTI, and the physical uplink shared channel (PUSCH) may be assigned to the shortened TTI. In this case, the user terminal is capable of performing transmission on the PUCCH by the normal TTI and transmission on the PUSCH by the shortened TTI.

Further, a multiple access scheme different from the OFDM (or SC-FDMA) that is the multiple access scheme of LTE Rel. 8-12 may be assigned (set) to the shortened TTI.

In the case where the above-mentioned shortened TTI is introduced, it is conceived that the user terminal controls transmission and reception of signals by using the shortened TTI (or shortened TTI and subframe). For example, in the case where the shortened TTI is set, it is considered that the user terminal controls so as to perform transmission of A-CSI at timing earlier than the subframe n + k in the case of receiving CSI triggering in the subframe n (or shortened TTI #nx included in subframe n). As timing earlier than the subframe n + k, for example, it is considered setting the subframe n + k' (or shortened TTI #nx + t included in subframe n + k').

Further, as for the periodic CSI (P-CSI), it is conceived that the transmission period is set shorter than that of the existing LTE system by using the shortened TTI (for example, predetermined shortened TTI period is set). Alternatively, it is also considered that transmission is controlled in units of subframes for P-CSI and transmission is controlled in units of shortened TTIs for A-CSI.

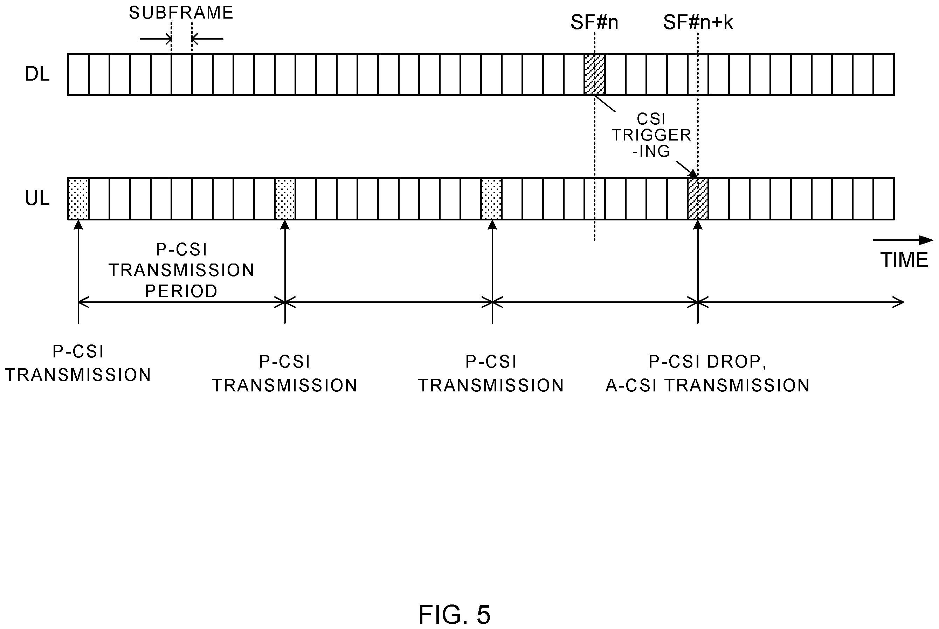

In addition, in the existing LTE system, in the case where transmission timing of the periodic CSI and that of the aperiodic CSI occur (collide) in the same subframe, the user terminal controls so as to transmit only the aperiodic CSI in the subframe (drop periodic CSI) (see FIG. 5).

FIG. 5 shows one example of the transmission method of P-CSI and A-CSI in the existing LTE system. Here, the case is shown where downlink control information (UL grant) or RAR grant including a CSI reporting request (CSI triggering) is transmitted from the radio base station to the user terminal in SF #n, and the user terminal transmits CSI in SF #n+ k. As shown in FIG. 5, in the case where transmission timing of P-CSI and that of A-CSI collide in SF #n + k, the user terminal drops P-CSI and performs transmission of A-CSI.

Thus, in the existing LTE system, P-CSI and A-CSI reporting operation (transmission timing, transmission control in collision and the like) is defined. Timing (for example, value of k) from when the user terminal receives A-CSI triggering until the user terminal performs A-CSI transmission is defined in accordance with the frame configuration (FDD/TDD) and the like.

On the other hand, it is not specified yet how to control transmission of P-CSI and A-CSI in the case of introducing the shortened TTI and/or processing time reduction. For example, in the case where P-CSI to be transmitted in units of subframes and/or in units of shortened TTIs and A-CSI to be transmitted in units of shortened TTIs collide, it is the problem that how the user terminal controls transmission.

The inventors of the present invention noted that the configuration is such that a plurality of shortened TTIs is included in the subframe in the case of introducing the shortened TTI, and conceived controlling transmission by selecting one of P-CSI and A-CSI in the case where transmission timing of P-CSI and transmission timing of A-CSI overlap in the same shortened TTI at least in the same cell.

For example, as one aspect of this Embodiment, CSI reporting operation is performed by controlling a collision of P-CSI and A-CSI in units of subframes. In this case, the user terminal controls transmission by selecting one of P-CSI and A-CSI in the case where transmission timing of P-CSI and that of A-CSI overlap in the same subframe irrespective of whether transmission of P-CSI is performed in units of subframes or in units of shortened TTIs.

Alternatively, as another aspect of this Embodiment, CSI reporting operation is performed by controlling a collision of P-CSI and A-CSI in units of shortened TTIs. In this case, it is possible to transmit P-CSI and A-CSI respectively when using different shortened TTIs even if transmission timing of P-CSI and that of A-CSI overlap in the same subframe.

Alternatively, as another aspect of this Embodiment, in the case where transmission timing of P-CSI and that of A-CSI overlap in the same shortened TTI, transmission is controlled by selecting one of or both P-CSI and A-CSI based on a predetermined condition.

Thus, by controlling CSI reporting operation in view of the overlap of transmission timing of P-CSI and that of A-CSI in the shortened TTI, even in the case where the shortened TTI and/or processing time reduction is introduced, it is possible to properly perform transmission.

This Embodiment will be explained below in detail. In the description below, TTI whose TTI length is shorter than 1 ms is referred to as shortened TTI, but may also be referred to as short TTI, shortened subframe, or short subframe. Further, TTI whose TTI length is 1 ms is referred to as normal TTI, but may also be referred to as normal TTI, long TTI, subframe, normal subframe, normal subframe, or long subframe. Furthermore, to the shortened TTI of this Embodiment, it is possible to apply the configuration shown in above-mentioned FIG. 1 to FIG. 4.

Further, in the description below, transmission and reception of aperiodic channel state information (A-CSI) is described as an example, but the signal to which it is possible to apply this Embodiment is not limited to this. It is possible to apply this Embodiment to any configuration in which the user terminal transmits a signal based on at least instructions (for example, triggering) from the radio base station. Further, in the description below, the LTE system is taken as an example, but this Embodiment is not limited to this and it is possible to apply to any system using the shortened TTI and/or processing time reduction. Furthermore, it is also possible to perform each of a plurality of aspects described below alone, or to perform in proper combination.

### (Aspect 1)

Aspect 1 describes the case where CSI reporting operation is performed by controlling a collision of P-CSI and A-CSI in units of subframes when introducing a shortened TTI.

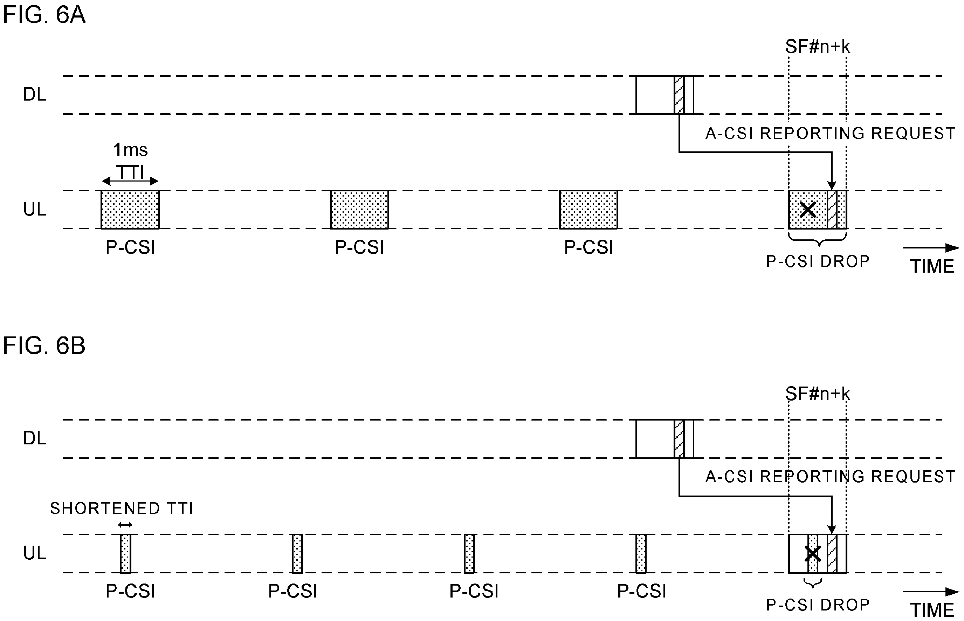

FIG. 6A and FIG. 6B show one example of transmission operation in a user terminal in the case where transmission timing of P-CSI and that of A-CSI overlap in the same subframe (SF #n + k). FIG. 6A shows the case where P-CSI is transmitted in units of subframes and FIG. 6B shows the case where P-CSI is transmitted in units of shortened TTIs.

In the case where transmission timing of P-CSI and that of A-CSI overlap in the same subframe in the same cell (or CC), the user terminal performs transmission by selecting one of P-CSI and A-CSI (here, A-CSI) and drops the other (here, P-CSI). In this case, the user terminal performs transmission by selecting one of P-CSI and A-CSI when transmission timing of P-CSI and that of A-CSI overlap in the same subframe irrespective of whether transmission of P-CSI is performed in units of subframes or in units of shortened TTIs.

In other words, even in the case where transmission timing of P-CSI and that of A-CSI overlap only in different shortened TTIs in the same subframe (see FIG. 6B), the user terminal controls so as to transmit only one of P-CSI and A-CSI (here, A-CSI). Thus, by performing CSI reporting operation by controlling a collision of P-CSI and A-CSI in units of subframes, the number of times of CSI transmission (and calculation/generation processing) per subframe is capable of being limited to one at the maximum, and therefore, it is possible to suppress an increase in the control load of the terminal compared to the existing system. In other words, it is no longer necessary for the user terminal to hold the ability to process a plurality of different CSI transmissions based on a plurality of pieces of CSI triggering and higher layer signaling in the same subframe.

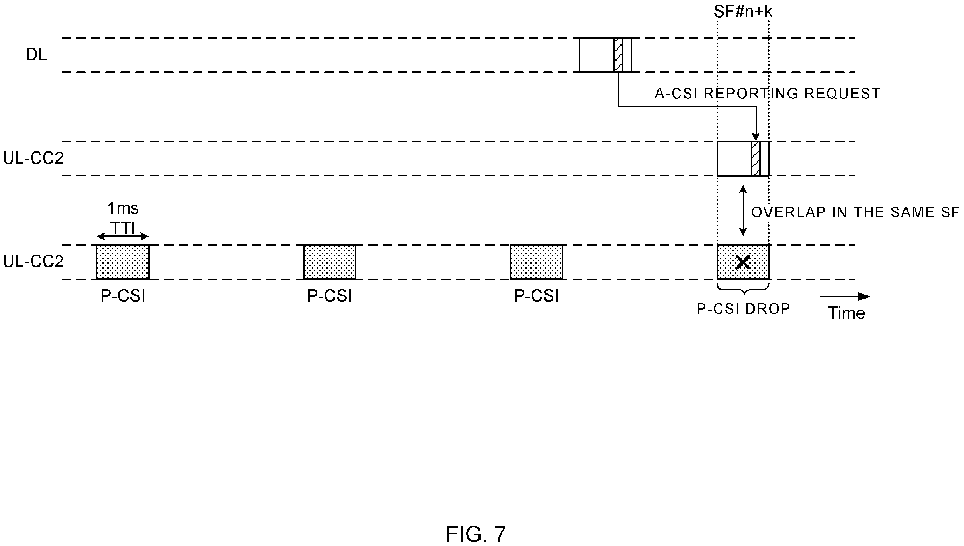

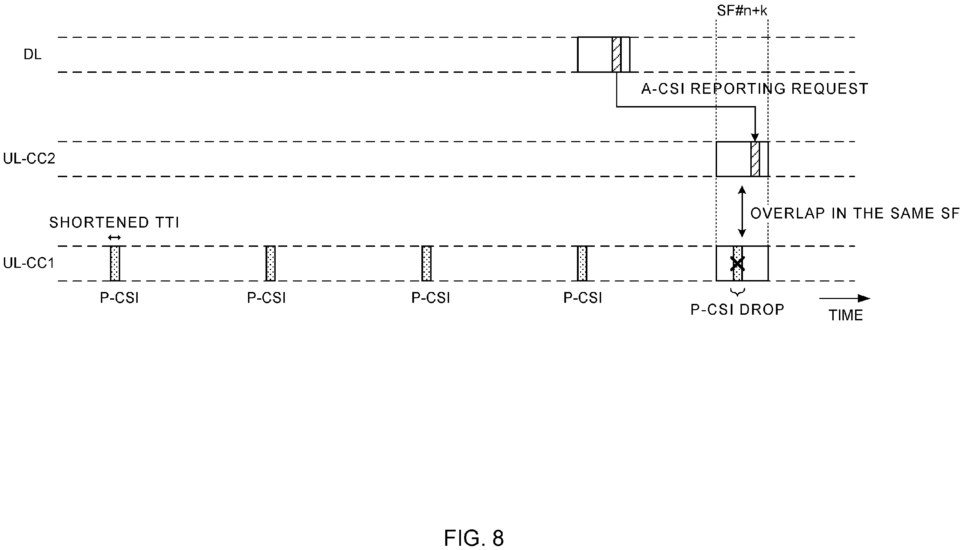

FIG. 7 and FIG. 8 show CSI reporting operation in the case where the user terminal transmits P-CSI and A-CSI by using different cells (or CCs) (for example, when UL-CA is applied). Here, the case is shown where P-CSI is transmitted in a first CC (CC1) and A-CSI is transmitted in a second CC (CC2). Specifically, FIG. 7 shows the case where transmission timing of P-CSI and that of A-CSI overlap in the same subframe (SF #n + k) when transmitting P-CSI in units of subframes. FIG. 8 shows the case where transmission timing of P-CSI and that of A-CSI overlap in the same subframe (SF #n + k) when transmitting P-CSI in units of shortened TTIs.

In the case where transmission timing of P-CSI and that of A-CSI overlap in the same subframe in different CCs, the user terminal performs transmission by selecting one of P-CSI and A-CSI (here, A-CSI) and drops the other (here, P-CSI). Even in the case of transmitting P-CSI and A-CSI in different CCs, the user terminal performs transmission by selecting one of P-CSI and A-CSI when transmission timing of P-CSI and that of A-CSI overlap in the same subframe irrespective of whether transmission of P-CSI is performed in units of subframes or in units of shortened TTIs.

In other words, even in the case where transmission timing of P-CSI and that of A-CSI, both of which are transmitted in different CCs respectively, overlap only in different shortened TTIs in the same subframe (see FIG. 8), the user terminal controls so as to transmit one of P-CSI and A-CSI (here, A-CSI). Thus, by performing CSI reporting operation by controlling a collision of P-CSI and A-CSI in units of subframes irrespective of the cell in which transmission is performed, the number of times of CSI transmission (and calculation/generation processing) per subframe is capable of being limited to one at the maximum, and therefore, it is possible to suppress an increase in the control load of the terminal compared to the existing system. In other words, it is no longer necessary for the user terminal to hold the ability to process a plurality of different CSI transmissions based on a plurality of pieces of CSI triggering and higher layer signaling in the same subframe.

### (Aspect 2)

Aspect 2 describes the case where a collision of P-CSI and A-CSI is taken into consideration in units of subframes and at the same time, CSI reporting operation is controlled based on reception (or decoding) timing of a reporting request giving instructions to report A-CSI transmitted from a radio base station.

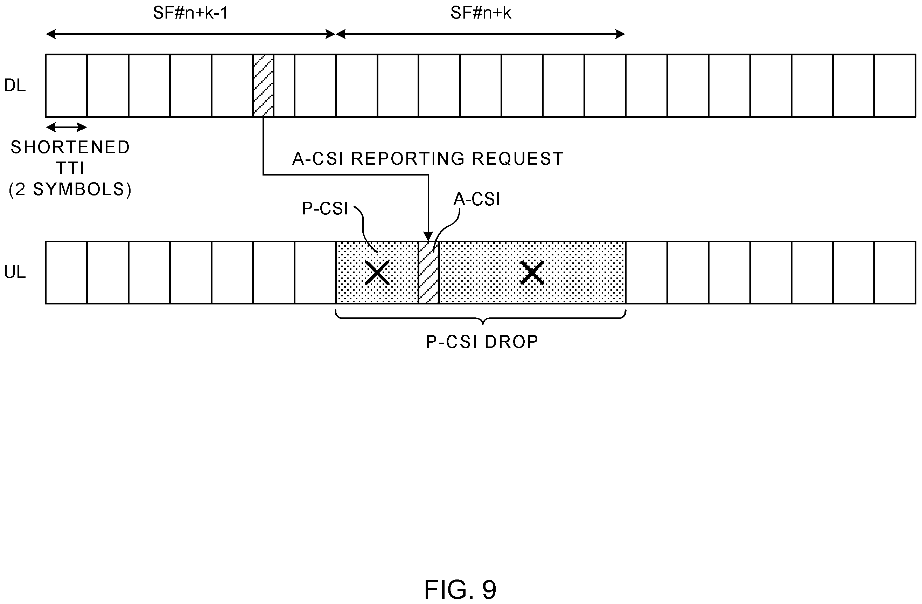

FIG. 9 shows one example of transmission operation in a user terminal in the case where transmission timing of P-CSI and that of A-CSI overlap in the same subframe (SF #n + k). In addition, FIG. 9 shows the case where P-CSI is transmitted in units of subframe and A-CSI is transmitted in a shortened TTI configured by two symbols.

As shown in the above-mentioned Aspect 1, in the case where a collision of P-CSI and A-CSI is taken into consideration in units of subframes, as shown in FIG. 9, the user terminal selects one of P-CSI and A-CSI (for example, A-CSI) in SF #n + k and drops the other (for example, P-CSI).

However, in the case where the period of time from reception of a reporting request (CSI triggering) giving instructions to report A-CSI until reporting of A-CSI is short, a possibility is conceived that the user terminal is performing transmission of P-CSI in the stage where CSI triggering is decoded.

For example, in FIG. 9, based on CSI triggering included in the downlink shortened TTI included in SF #n + k - 1, the user terminal reports A-CSI in the uplink shortened TTI included in the next SF #n + k. In this case, it is considered that the user terminal completes decoding of CSI triggering giving instructions to report A-CSI after starting transmission of P-CSI in SF #n + k. In this case, it is the problem how to control transmission of P-CSI and A-CSI.

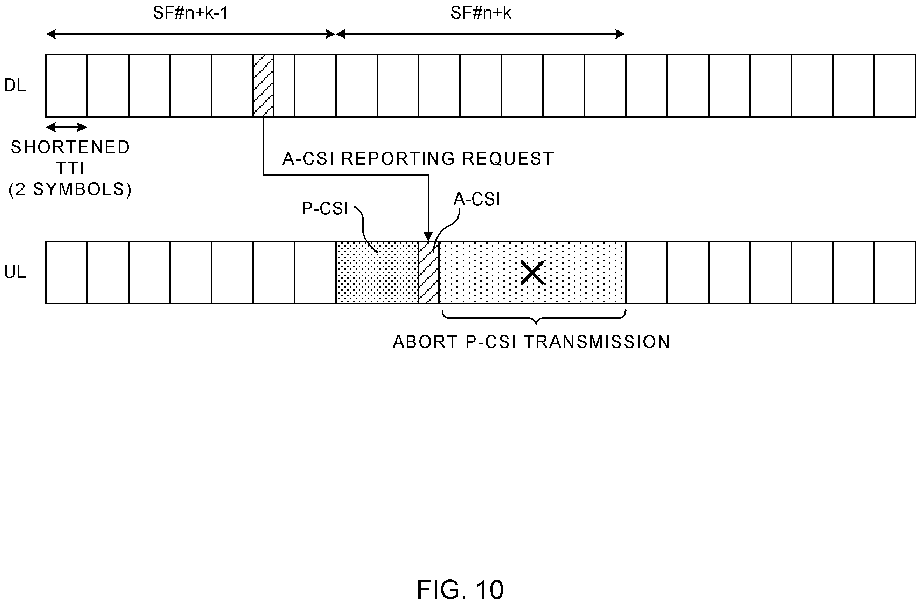

FIG. 10 shows one example of a transmission method of P-CSI and A-CSI in the case where decoding of CSI triggering giving instructions to report A-CSI is completed after starting transmission of P-CSI in SF #n + k. In FIG. 10, in the case of performing reception or decoding of downlink control information including CSI triggering after starting P-CSI transmission, the user terminal controls so as to abort transmission of P-CSI and perform transmission of A-CSI.

In other words, the user terminal halts transmission of P-CSI at the point in time of decoding of CSI triggering (or coding of UL shared channel (sPUSCH) including A-CSI) and performs transmission of A-CSI. At this time, the user terminal may control so as to perform P-CSI transmission until transmission of A-CSI. Thus, by aborting transmission of P-CSI and performing transmission of A-CSI, even in the case where the processing time of A-CSI (period of time from CSI triggering reception until A-CSI reporting) is short, it is possible to properly transmit A-CSI.

In FIG. 10, transmission of P-CSI and A-CSI in the same CC is shown, but it is also possible to apply similarly in the case where transmission of P-CSI and A-CSI is performed in different CCs (for example, when UL-CA is applied). In other words, the user terminal halts transmission of P-CSI in a predetermined cell (for example, primary cell, PUCCH cell) at the point in time of decoding of CSI triggering (or coding of UL shared channel (ePUSCH) including A-CSI) and performs transmission of A-CSI in the cell for which CSI transmission is triggered.

Alternatively, the user terminal is also capable of controlling so as to continue transmission of P-CSI and not performing transmission of A-CSI (dropping A-CSI) in the case of receiving or decoding CSI triggering after starting P-CSI transmission. In other words, in the case of receiving instructions for A-CSI transmission that overlaps the P-CSI transmission section after predetermined timing before the start of P-CSI transmission, the user terminal is capable of dropping the A-CSI and performing transmission of the P-CSI. In this case, it is possible to properly transmit P-CSI whose transmission has already been started. The predetermined timing may be common between users, or may be a value to be set individually by a user.

### (Aspect 3)

Aspect 3 describes the case where CSI reporting operation is performed by controlling a collision of P-CSI and A-CSI in units of shortened TTIs when introducing a shortened TTI.

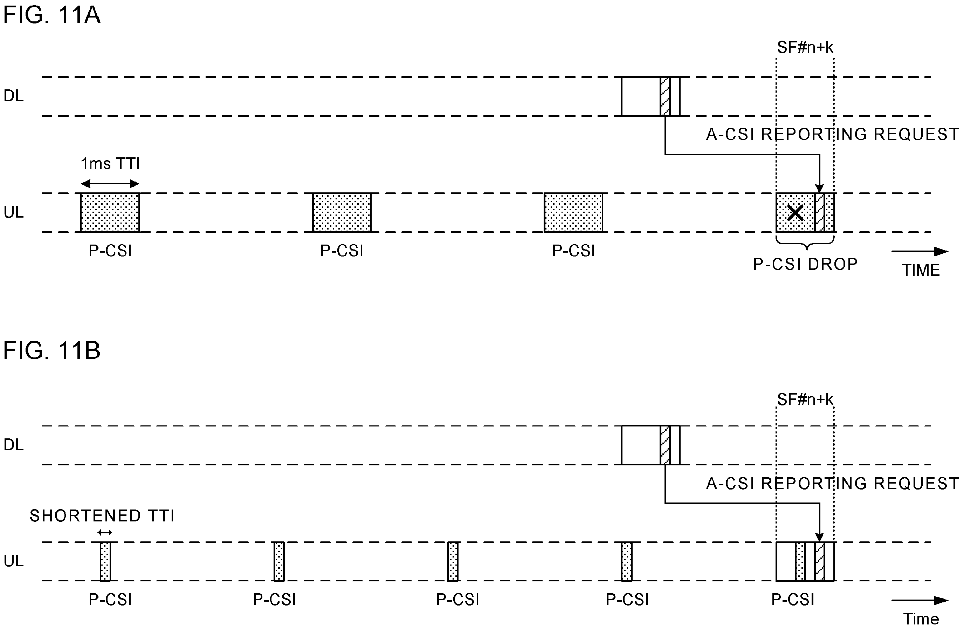

FIG. 11A shows one example of transmission operation in a user terminal in the case where transmission timing of P-CSI and that of A-CSI overlap at least in the same shortened TTI. In addition, FIG. 11A shows the case where P-CSI is transmitted in units of subframes, and P-CSI transmitted in SF #n + k and A-CSI transmitted in the shortened TTI included in SF #n + k overlap.

In the case where transmission timing of P-CSI and that of A-CSI overlap in the same shortened TTI in the same cell (or CC), the user terminal performs transmission by selecting one of P-CSI and A-CSI (here, A-CSI) and drops the other (here, P-CSI).

FIG. 11B shows one example of transmission operation in the user terminal in the case where transmission timing of P-CSI and that of A-CSI are set in different shortened TTIs within the same subframe. In addition, FIG. 11B shows the case where P-CSI is transmitted in units of shortened TTIs, transmission timing of P-CSI is set in a first shortened TTI included in SF #n + k, and transmission timing of A-CSI is set in a second shortened TTI included in SF #n + k.

In the case where transmission timing of P-CSI and that of A-CSI are set in different shortened TTIs in the same subframe, the user terminal transmits P-CSI and A-CSI in different shortened TTIs respectively. Thus, by performing CSI reporting operation by controlling a collision of P-CSI and A-CSI in units of shortened TTIs, even in the case where transmission timing of P-CSI and that of A-CSI overlap in the same subframe, it is possible to perform transmission by using different shortened TTIs. By this means, the chance of transmission of A-CSI and/or P-CSI is capable of being increased (drop probability is reduced), and therefore, it is possible to increase adaptability of scheduling control.

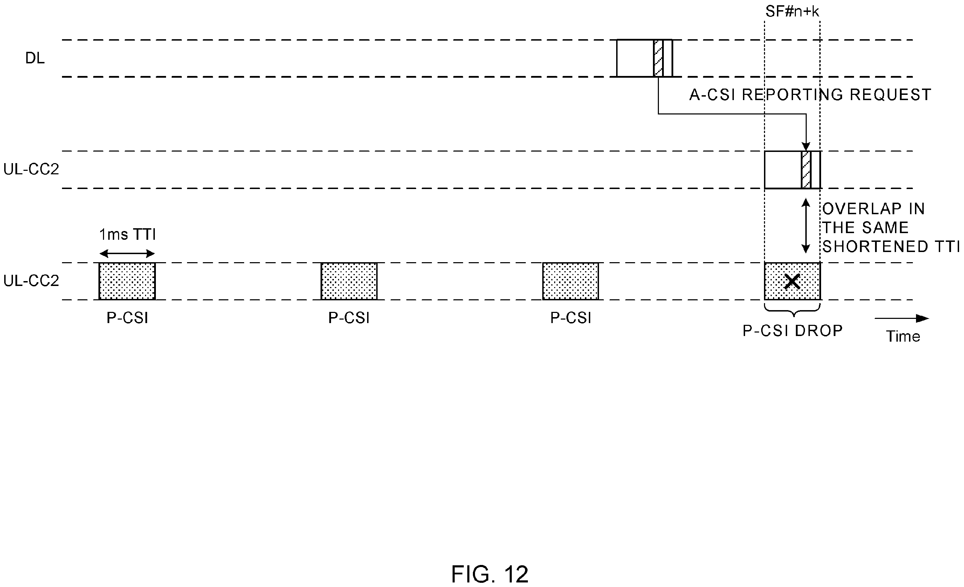

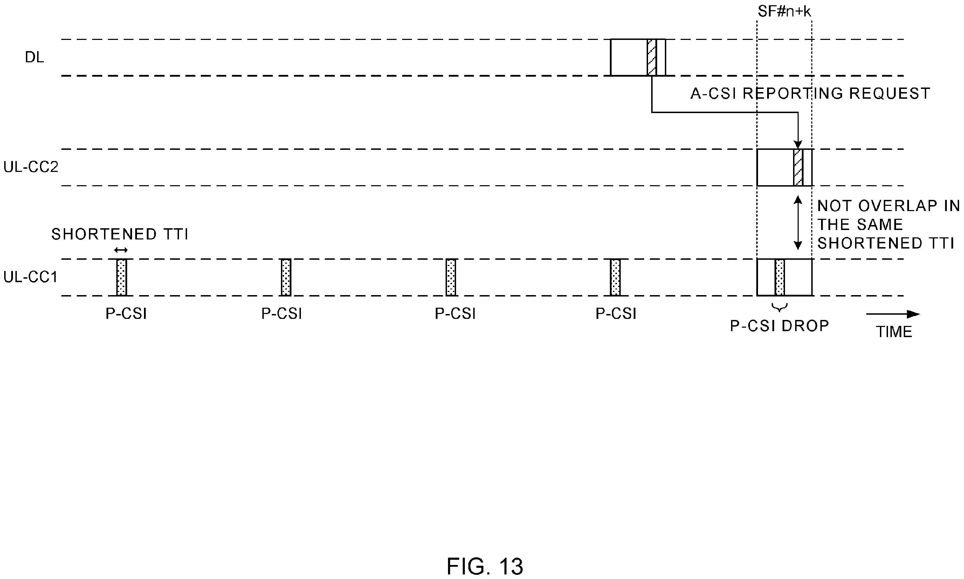

FIG. 12 and FIG. 13 show CSI reporting operation in the case where the user terminal transmits P-CSI and A-CSI with different cells (or CCs) (for example, when UL-CA is applied). Here, the case is shown where P-CSI is transmitted in the first CC (CC1) and A-CSI is transmitted in the second CC (CC2). Specifically, FIG. 12 shows the case where transmission timing of P-CSI and that of A-CSI overlap in the same shortened TTI (shortened TTI included in SF #n + k) when transmitting P-CSI in units of subframes. FIG. 13 shows the case where transmission timing of P-CSI and that of A-CSI are set in different shortened TTIs in the same subframe (SF #n + k) respectively when transmitting P-CSI in units of shortened TTIs.

In the case where transmission timing of P-CSI and that of A-CSI overlap in the same shortened TTI in different CCs (see FIG. 12), the user terminal performs transmission by selecting one of P-CSI and A-CSI (here, A-CSI) and drops the other (here, P-CSI). On the other hand, even in the case where transmission timing of P-CSI and that of A-CSI overlap in the same subframe in different CCs, when using different shortened TTIs, the user terminal transmits both P-CSI and A-CSI.

In other words, in the case of transmitting P-CSI and A-CSI in different CCs respectively, the user terminal transmits only one of P-CSI and A-CSI when transmissions overlap in the shortened TTI and transmits both P-CSI and A-CSI when transmissions do not overlap in the shortened TTI. Consequently, even in the case where transmission timing of P-CSI and that of A-CSI overlap in the same subframe in different CCs, it is possible to perform transmission by using different shortened TTIs.

Further, in the case of performing CSI reporting operation by controlling a collision of P-CSI and A-CSI in units of shortened TTIs, as shown in above-mentioned FIG. 9, if the period of time from reception of CSI triggering until reporting of A-CSI is short, a possibility is considered that the user terminal is performing transmission of P-CSI in the stage where CSI triggering is decoded. Therefore, in the case where a collision of P-CSI and A-CSI is taken into consideration in units of shortened TTIs also, based on reception timing of CSI triggering of A-CSI, decoding timing, or timing at which transmission preparation (for example, coding) of UL data including A-CSI is capable of being made, transmission of P-CSI and A-CSI may be controlled.

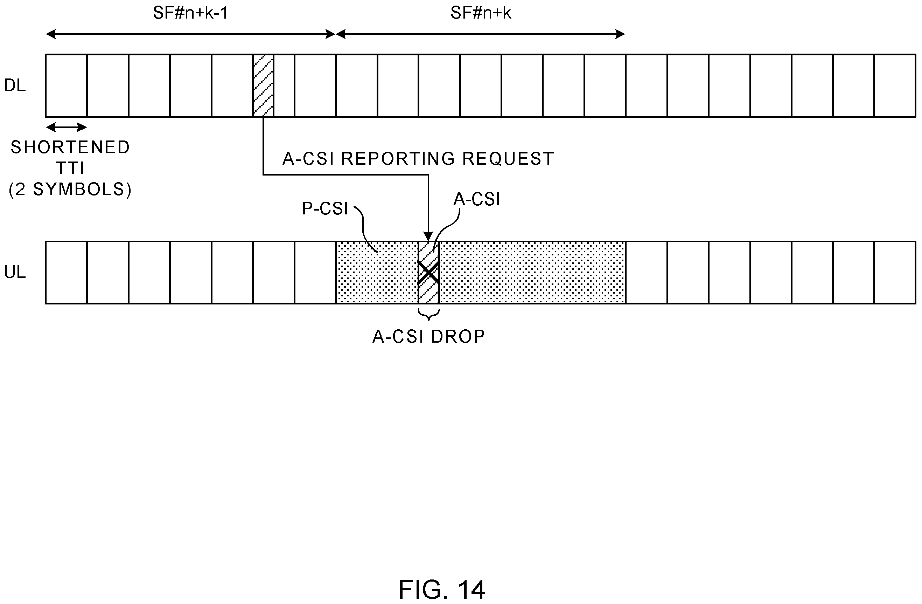

FIG. 14 shows one example of a transmission method of P-CSI and A-CSI in the case where decoding of CSI triggering or coding of sPUSCH including A-CSI is not capable of being completed before the start of P-CSI transmission (or in the case where transmission of P-CSI has already been started at the point in time of decoding of CSI triggering or coding of sPUSCH including A-CSI).

In this case, the user terminal is capable of giving up (dropping) transmission of A-CSI and continuing transmission of P-CSI (see FIG. 14). Thus, by continuing transmission of P-CSI whose transmission has already been started and giving up transmission of A-CSI, it is possible to properly transmit P-CSI and reduce the processing load of the user terminal by obviating generation of A-CSI, and the like. For example, the user terminal may control so as to drop P-CSI in the case of being capable of completing decoding of CSI triggering or coding of sPUSCH including A-CSI before the start of P-CSI transmission, and drop A-CSI in the case of not being capable of completing.

Alternatively, the user terminal may control so as to drop P-CSI and perform transmission of A-CSI in the case of being not capable of completing decoding of CSI triggering or coding of sPUSCH including A-CSI before the start of P-CSI transmission (or in the case where P-CSI transmission has been started at the point in time of decoding of CSI triggering or coding of sPUSCH including A-CSI). In the case where transmission of P-CSI has already been started, the user terminal may control so as to abort transmission of P-CSI and perform transmission of A-CSI as shown in above-mentioned FIG. 10. Thus, by aborting transmission of P-CSI and performing transmission of A-CSI, even in the case where the processing time of A-CSI (period of time from CSI triggering reception until A-CSI reporting) is short, it is possible to properly transmit A-CSI.

In addition, in FIG. 14, transmission of P-CSI and A-CSI in the same CC is shown, but it is also possible to apply similarly in the case where transmission of P-CSI and A-CSI is performed in different CCs (for example, when UL-CA is applied).

### (Aspect 4)

Aspect 4 describes another example in the case where CSI reporting operation is performed by controlling a collision of P-CSI and A-CSI in units of shortened TTIs when introducing a shortened TTI.

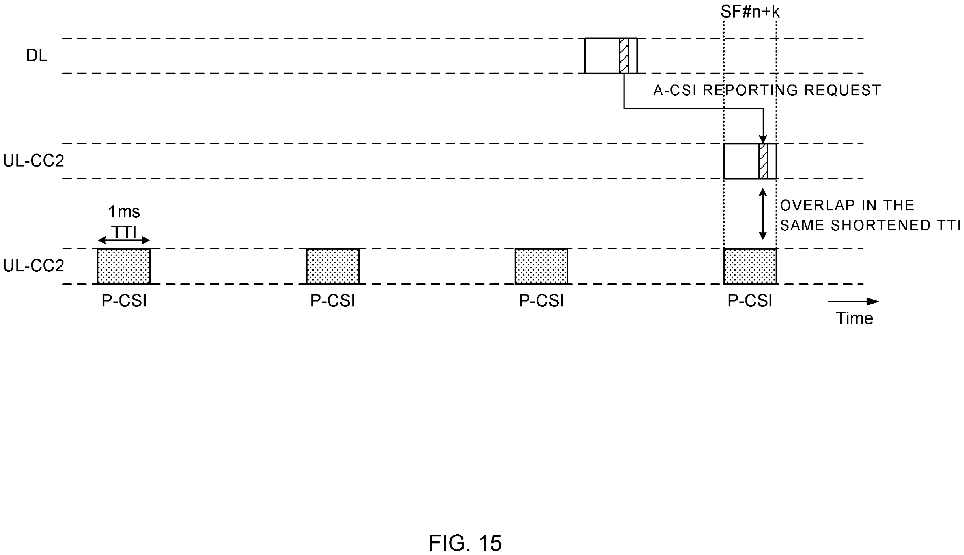

FIG. 15 shows CSI reporting operation in the case where a user terminal transmits P-CSI and A-CSI by using different cells (or CCs) (for example, when UL-CA is applied). Here, the case is shown where P-CSI is transmitted in the first CC (CC1) and A-CSI is transmitted in the second CC (CC2). Specifically, FIG. 15 shows the case where transmission timing of P-CSI and that of A-CSI overlap in the same shortened TTI (shortened TTI included in SF #n + k) when transmitting P-CSI in units of subframes.

In the case where transmission timing of P-CSI and that of A-CSI overlap in the same shortened TTI in different CCs, the user terminal may perform transmission with different CCs for P-CSI and A-CSI respectively. In other words, even in the case where transmission timing of P-CSI and that of A-CSI overlap in the same shortened TTI, the user terminal is permitted concurrent transmission of P-CSI and A-CSI when performing transmission of P-CSI and A-CSI in different CCs.

Thus, by performing transmission of P-CSI and A-CSI in the same shortened TTI in different CCs, it is possible to suppress CSI reporting to each CC from being delayed.

### (Radio communication system)

A configuration of a radio communication system according to this Embodiment will be described below. In the radio communication system, the radio communication method according to each of the above-mentioned Aspects is applied. In addition, the radio communication method according to each of the above-mentioned Aspects may be applied alone, or may be applied in combination.

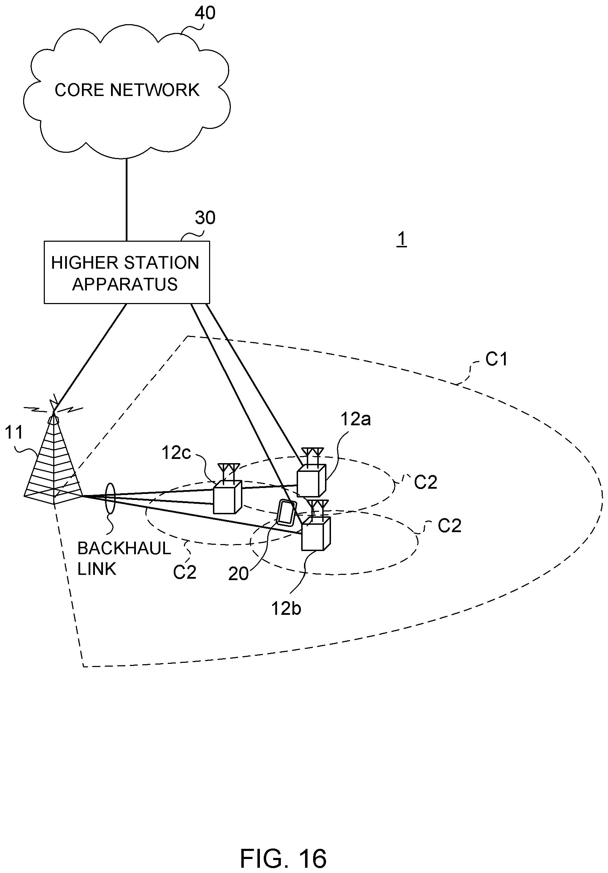

FIG. 16 is a diagram showing one example of a schematic configuration of a radio communication system according to this Embodiment. In a radio communication system 1, it is possible to apply Carrier Aggregation (CA) to aggregate a plurality of base frequency blocks (component carriers) with a system bandwidth (for example, 20 MHz) of the LTE system as one unit and/or Dual Connectivity (DC). In addition, the radio communication system 1 may be referred to as SUPER 3G, LTE-A (LTE-Advanced), IMT-Advanced, 4G, 5G, FRA (Future Radio Access), NR (New Rat) and the like.

The radio communication system 1 as shown in FIG. 16 is provided with a radio base station 11 for forming a macrocell C1, and radio base stations 12a to 12c disposed within the macrocell C1 and for forming small cells C2 smaller than the macrocell C1. Further, a user terminal 20 is disposed in the macrocell C1 and each of the small cells C2. A configuration may be made where numerologies (for example, different TTI lengths and/or processing times) different between cells are applied. In addition, the numerology refers to a set of communication parameters that characterize the design of a signal in certain RAT, or the design of the RAT.

The user terminal 20 is capable of connecting to both of the radio base station 11 and the radio base station 12. It is conceived that the user terminal 20 concurrently uses the macrocell C1 and small cell C2 using different frequencies by CA or DC. Further, the user terminal 20 is capable of applying CA or DC by using a plurality of cells (CCs) (for example, two or more CCs). Furthermore, the user terminal is capable of using a licensed band CC and unlicensed band CC as a plurality of cells. In addition, it is possible to make a configuration where an FDD carrier and/or TDD carrier that applies the shortened TTI is included in one of the plurality of cells.

The user terminal 20 and radio base station 11 are capable of communicating with each other using carriers (referred to as existing carrier, Legacy carrier and the like) with a narrow bandwidth in a relatively low frequency band (for example, 2 GHz). On the other hand, the user terminal 20 and radio base station 12 may use carriers with a wide bandwidth in a relatively high frequency band (for example, 3.5 GHz, 5 GHz, 30 to 70 GHz and the like), or may use the same carrier as in the radio base station 11. In addition, the configuration of the frequency band each radio base station uses is not limited to this.

It is possible to configure that the radio base station 11 and radio base station 12 (or two radio base stations 12) are capable of wired connection (for example, Optical fiber in conformity with CPRI (Common Public Radio Interface), X2 interface and the like), or wireless connection.

The radio base station 11 and each of the radio base stations 12 are respectively connected to a higher station apparatus 30, and are connected to a core network 40 via the higher station apparatus 30. In addition, for example, the higher station apparatus 30 includes an access gateway apparatus, Radio Network Controller (RNC), Mobility Management Entity (MME) and the like, but is not limited thereto. Further, each of the radio base stations 12 may be connected to the higher station apparatus 30 via the radio base station 11.

In addition, the radio base station 11 is a radio base station having relatively wide coverage, and may be referred to as a macro base station, Aggregate node, eNB (eNodeB), transmission/reception point and the like. Further, the radio base station 12 is a radio base station having local coverage, and may be referred to as a small base station, micro-base station, pico-base station, femto-base station, HeNB (Home eNodeB), RRH (Remote Radio Head), transmission/reception point and the like. Hereinafter, in the case of not distinguishing between the radio base stations 11 and 12, the stations are collectively referred to as a radio base station 10.

Each of the user terminal 20 is a terminal supporting various types of communication schemes such as LTE and LTE-A, and may include a fixed communication terminal as well as a mobile communication terminal.

In the radio communication system 1, as radio access schemes, it is possible to apply OFDMA (Orthogonal Frequency Division Multiple Access) on downlink (DL) and SC-FDMA (Single Carrier-Frequency Division Multiple Access) on uplink (UL). OFDMA is a multicarrier transmission scheme for dividing a frequency band into a plurality of narrow frequency bands (subcarriers), and mapping data to each subcarrier to perform communication. SC-FDMA is a single-carrier transmission scheme for dividing a system bandwidth into bands comprised of a single or contiguous resource blocks for each terminal so that a plurality of terminals uses mutually different bands, and thereby reducing interference among terminals. The uplink and downlink radio access schemes are not limited to these combinations and OFDMA may be used on UL.

In the radio communication system 1, as DL channels, a DL data channel (PDSCH: Physical Downlink Shared Channel, also referred to as DL shared channel and the like) shared by each of user terminal 20, broadcast channel (PBCH: Physical Broadcast Channel), L1/L2 control channel and the like are used. User data and higher layer control information, SIB (System Information Block) and the like are transmitted on the PDSCH. Further, MIB (Master Information Block) is transmitted on the PBCH.

The L1/L2 control channel includes a DL control channel (PDCCH (Physical Downlink Control Channel), EPDCCH (Enhanced Physical Downlink Control Channel)), PCFICH (Physical Control Format Indicator Channel), PHICH (Physical Hybrid-ARQ Indicator Channel) and the like. Downlink control information (DCI) including scheduling information of the PDSCH and PUSCH, and the like is transmitted on the PDCCH. The number of OFDM symbols used for the PDCCH is transmitted on the PCFICH. Receipt confirmation information (ACK/NACK) of the HARQ for the PUSCH is transmitted on the PHICH. The EPDCCH is frequency division multiplexed with the PDSCH (downlink shared data channel) and used for transmission of the DCI and the like as on the PDCCH.

In the radio communication system 1, as UL channels, a UL data channel (PUSCH: Physical Uplink Shared Channel, also referred to as UL shared channel and the like) shared by each of user terminal 20, UL control channel (PUCCH: Physical Uplink Control Channel), random access channel (PRACH: Physical Random Access Channel) and the like are used. User data and higher layer control information are transmitted on the PUSCH. Uplink control information (UCI) including at least one of reception confirmation information (ACK/NACK), radio quality information (CQI) and the like is transmitted on the PUSCH or PUCCH. A random access preamble for establishing connection with a cell is transmitted on the PRACH.

### <Radio base station>

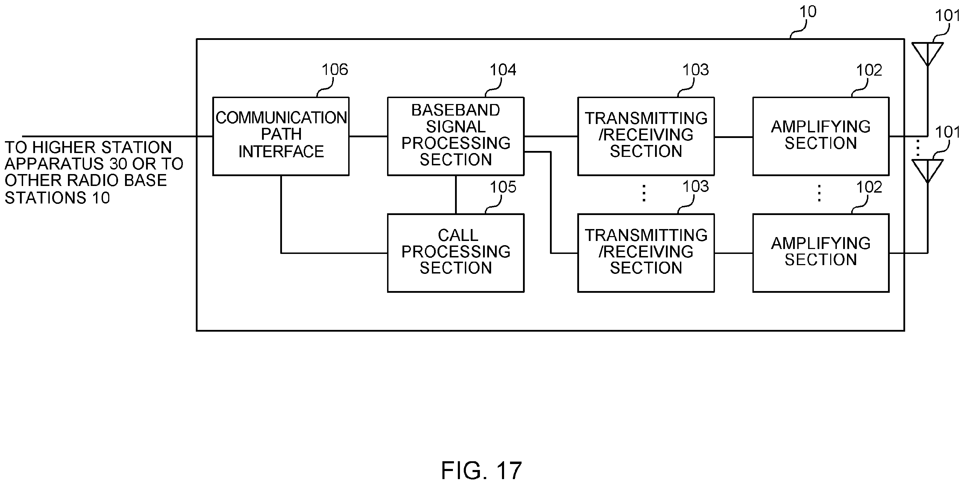

FIG. 17 is a diagram showing one example of an entire configuration of the radio base station according to this Embodiment. The radio base station 10 is provided with a plurality of transmission/reception antennas 101, amplifying sections 102, transmission/reception sections 103, baseband signal processing section 104, call processing section 105, and transmission path interface 106. In addition, it is essential only that the radio base station 10 is configured so as to include one or more transmission/reception antennas 101, one or more amplifying sections 102, and one or more transmission/reception sections 103 respectively.

DL data to be transmitted to the user terminal 20 from the radio base station 10 is input to the baseband signal processing section 104 from the higher station apparatus 30 via the transmission path interface 106.

The baseband signal processing section 104 performs, concerning the DL data, processing of PDCP (Packet Data Convergence Protocol) layer, segmentation and concatenation of user data, transmission processing of RLC (Radio Link Control) layer such as RLC retransmission control, MAC (Medium Access Control) retransmission control (for example, transmission processing of HARQ), scheduling, transmission format selection, channel coding, Inverse Fast Fourier Transform (IFFT) processing, and precoding processing, and the DL data is transferred to the transmission/reception sections 103. Further, concerning a DL control signal also, the section 104 performs transmission processing such as channel coding and Inverse Fast Fourier Transform, and the DL control signal is transferred to the transmission/reception sections 103.

The transmission/reception section 103 converts the baseband signal, which is subjected to precoding for each antenna and is output from the baseband signal processing section 104, into a signal with a radio frequency band and transmits the signal. The radio-frequency signal subjected to frequency conversion in the transmission/reception section 103 is amplified in the amplifying section 102 and is transmitted from the transmission/reception antenna 101. It is possible to configure the transmission/reception section 103 from a transmitter/receiver, transmission/reception circuit, or transmission/reception apparatus, which are described based on the common recognition in the technical field according to the present invention. In addition, the transmission/reception section 103 may be configured as one transmission/reception section or may be configured by a transmission section and reception section.

On the other hand, for a UL signal, the radio-frequency signal received in the transmission/reception antenna 101 is amplified in the amplifying section 102. The transmission/reception section 103 receives the UL signal amplified in the amplifying section 102. The transmission/reception section 103 subjects the received signal to frequency conversion to be a baseband signal and outputs to the baseband signal processing section 104.

For user data included in the input UL signal, the baseband signal processing section 104 performs Fast Fourier Transform (FFT) processing, Inverse Discrete Fourier Transform (IDFT) processing, error correcting decoding, reception processing of MAC retransmission control, and reception processing of RLC layer and PDCP layer, and the user data is transferred to the higher station apparatus 30 via the transmission path interface 106. The call processing section 105 performs call processing such as setting and release of a communication channel, state management of the radio base station 10, and management of radio resources.

The transmission path interface 106 performs transmission and reception of signals with the higher station apparatus 30 via a predetermined interface. Further, the transmission path interface 106 may perform transmission and reception of signals (backhaul signaling) with another radio base station 10 via an interface between base stations (for example, Optical fiber in conformity with CPRI (Common Public Radio Interface), X2 interface).

In addition, the transmission/reception section 103 transmits a DL signal (for example, DL control signal (DL control channel), DL data signal (DL data channel, DL shared channel), DL reference signal (DM-RS, CSI-RS and the like), discovery signal, synchronization signal, broadcast signal and the like) and receives a UL signal (for example, UL control signal (UL control channel), UL data signal (UL data channel), UL shared channel), UL reference signal and the like).

Specifically, the transmission/reception section 103 transmits a reporting request to trigger reporting of A-CSI by applying the shortened TTI. Further, the transmission/reception section 103 transmits information on a transmission period to be applied to transmission of P-CSI and/or resources. In this case, the transmission/reception section 103 may transmit information on the TTI (for example, whether to transmit in subframe or in shortened TTI) to be applied to transmission of P-CSI.

Further, the transmission/reception section 103 receives A-CSI to be transmitted from the user terminal using the shortened TTI and P-CSI to be transmitted using the shortened TTI and/or subframe. In this case, the transmission/reception section 103 controls so as to receive one of A-CSI and P-CSI when transmission timing of A-CSI and transmission timing of P-CSI overlap in the same shortened TTI at least in the same cell. Further, the transmission/reception section 103 may receive one of A-CSI and P-CSI in the case where transmission timing of A-CSI and transmission timing of P-CSI overlap in the same subframe. Furthermore, the transmission/reception section 103 may control so as to receive A-CSI and P-CSI in the case where transmission timing of A-CSI and transmission timing of P-CSI are set in different shortened TTIs in the same subframe.

The transmission section and reception section of the present invention are configured by the transmission/reception section 103 and/or transmission path interface 106.

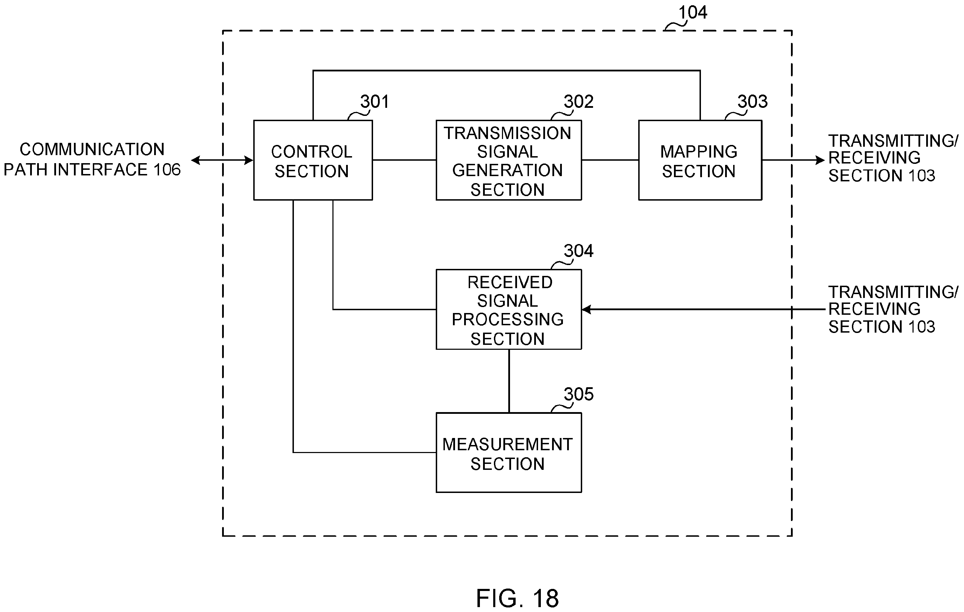

FIG. 18 is diagram showing one example of a function configuration of the radio base station according to this Embodiment. In addition, FIG. 18 mainly shows function blocks of a characteristic portion in this Embodiment, and it is assumed that the radio base station 10 also has other function blocks required for radio communications. As shown in FIG. 18, the baseband signal processing section 104 is provided with at least a control section 301, transmission signal generating section 302, mapping section 303, received signal processing section 304, and measuring section 305.

The control section 301 performs control of the entire radio base station 10. It is possible to configure the control section 301 by a controller, control circuit, or control apparatus, which are described based on the common recognition in the technical field according to the present invention.

The control section 301 controls, for example, generation of a signal by the transmission signal generating section 302 and assignment of a signal by the mapping section 303. Further, the control section 301 controls reception processing of a signal by the received signal processing section 304 and measurement of a signal by the measuring section 305.

The control section 301 controls scheduling (for example, resource assignment) of a DL signal and/or UL signal. Specifically, the control section 301 controls the transmission signal generating section 302, mapping section 303, and transmission/reception section 103 so as to generate and transmit DCI (DL assignment) including scheduling information on the DL data channel, and DCI (UL grant) including scheduling information on the UL data channel. Further, the control section 301 controls so that the DCI (for example, UL grant) includes a reporting request (CSI request) to trigger reporting of channel state information.

The transmission signal generating section 302 generates a DL signal (DL control channel, DL data channel, DL reference signal such as DM-RS) and outputs the DL signal to the mapping section 303 based on instructions from the control section 301. It is possible to configure the transmission signal generating section 302 by a signal generator, signal generating circuit, or signal generating apparatus, which are described based on the common recognition in the technical field according to the present invention.

The mapping section 303 maps the DL signal generated in the transmission signal generating section 302 to a predetermined radio resource and outputs to the transmission/reception section 103 based on instructions from the control section 301. It is possible to configure the mapping section 303 by a mapper, mapping circuit, or mapping apparatus, which are described based on the common recognition in the technical field according to the present invention.

The received signal processing section 304 performs reception processing (for example, demapping, demodulation, decoding and the like) for the received signal input from the transmission/reception section 103. Here, the received signal is, for example, a UL signal (UL control channel, UL data channel, UL reference signal and the like) transmitted from the user terminal 20. It is possible to configure the received signal processing section 304 by a signal processor, signal processing circuit, or signal processing apparatus, which are described based on the common recognition in the technical field according to the present invention.

The received signal processing section 304 outputs information decoded by reception processing to the control section 301. For example, the received signal processing section 304 outputs at least one of a preamble, control information, and UL data to the control section 301. Further, the received signal processing section 304 outputs a received signal and signal after reception processing to the measuring section 305.

The measuring section 305 performs measurement concerning the received signal. It is possible to configure the measuring section 305 by a measurer, measuring circuit, or measuring apparatus, which are described based on the common recognition in the technical field according to the prevent invention.

The measuring section 305 may measure, for example, received power of a received signal (for example, RSRP (Reference Signal Received Power)), received quality (for example, RSRQ (Reference Signal Received Quality)), channel state and the like. Measurement results may be output to the control section 301.

<User terminal >

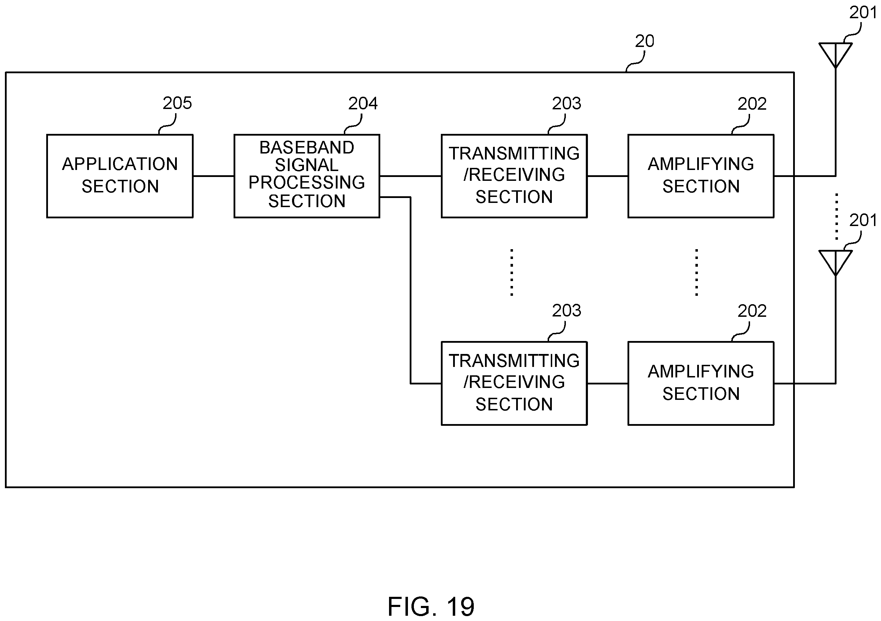

FIG. 19 is a diagram showing one example of an entire configuration of a user terminal according to this Embodiment. The user terminal 20 is provided with a plurality of transmission/reception antennas 201, amplifying sections 202, transmission/reception sections 203, baseband signal processing section 204, and application section 205. In addition, it is essential only that the user terminal 20 is configured so as to include one or more transmission/reception antennas 201, one or more amplifying sections 202, and one or more transmission/reception sections 203 respectively.

A radio-frequency signal received in the transmission/reception antenna 201 is amplified in the amplifying section 202. The transmission/reception section 203 receives a DL signal amplified in the amplifying section 202. The transmission/reception section 203 subjects the received signal to frequency conversion to be a baseband signal and outputs to the baseband signal processing section 204. It is possible to configure the transmission/reception section 203 by a transmitter/receiver, transmission/reception circuit, or transmission/reception apparatus, which are described based on the common recognition in the technical field according to the present invention. In addition, the transmission/reception section 203 may be configured as one transmission/reception section, or may be configured by a transmission section and reception section.

The baseband signal processing section 204 performs FFT processing, error correcting decoding, reception processing of retransmission control and the like for the input baseband signal. DL data is transferred to the application section 205. The application section 205 performs processing concerning layers higher than physical layer and MAC layer, and the like. Further, among the DL data, system information and higher layer control information are also transferred to the application section 205.

On the other hand, UL data is input to the baseband signal processing section 204 from the application section 205. The baseband signal processing section 204 performs transmission processing of retransmission control (for example, transmission control of HARQ), channel coding, precoding, Discrete Fourier Transform (DFT) processing, IFFT processing and the like, and the data is transferred to the transmission/reception section 203. The transmission/reception section 203 converts the baseband signal output from the baseband signal processing section 204 into a signal with a radio frequency band and transmits the signal. The radio-frequency signal subjected to frequency conversion in the transmission/reception section 203 is amplified in the amplifying section 202 and transmitted from the transmission/reception antenna 201.

In addition, the transmission/reception section 203 receives a DL signal (for example, DL control signal (DL control channel), DL data signal (DL data channel, DL shared channel), DL reference signal (DM-RS, CSI-RS and the like), discovery signal, synchronization signal, broadcast signal and the like), and transmits a UL signal (for example, UL control signal (UL control channel), UL data signal (UL data channel, UL shared channel), UL reference signal and the like).

Specifically the transmission/reception section 203 receives a reporting request to trigger reporting of A-CSI by applying the shortened TTI. Further, the transmission/reception section 203 performs transmission of P-CSI using the shortened TTI and transmission of P-CSI using the shortened TTI and/or subframe. In this case, the transmission/reception section 203 is capable of performing transmission by selecting one of A-CSI and P-CSI when transmission timing of A-CSI and transmission timing of P-CSI overlap in the same shortened TTI at least in the same cell.

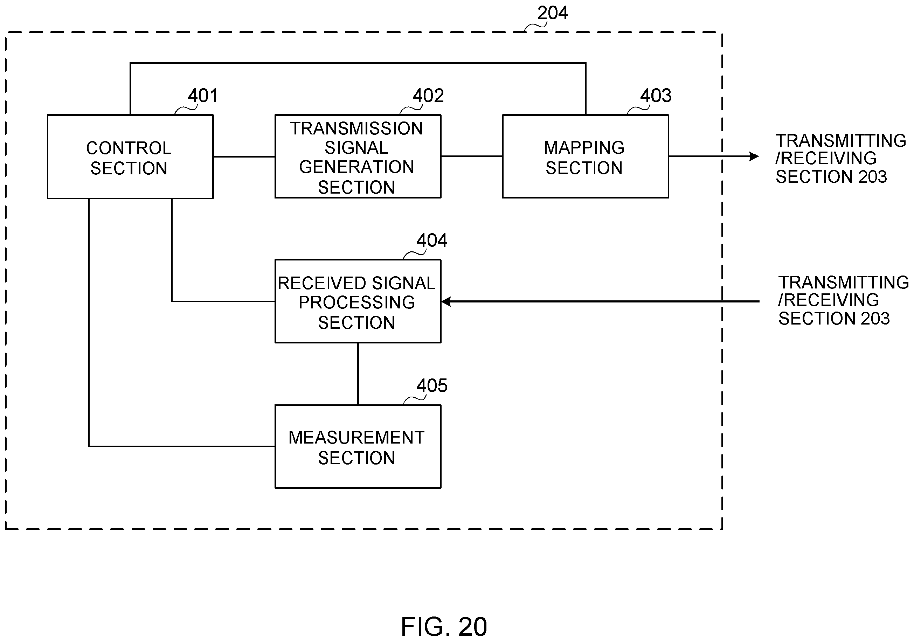

FIG. 20 is a diagram showing one example of a function configuration of the user terminal according to this Embodiment. In addition, FIG. 20 mainly shows function blocks of a characteristic portion in this Embodiment, and it is assumed that the user terminal 20 also has other function blocks required for radio communications. As shown in FIG. 20, the baseband signal processing section 204, which the user terminal 20 has, is provided with at least a control section 401, transmission signal generating section 402, mapping section 403, received signal processing section 404, and measuring section 405.

The control section 401 performs control of the entire user terminal 20. It is possible to configure the control section 401 by a controller, control circuit, or control apparatus, which are described based on the common recognition in the technical field according to the present invention.

The control section 401 controls, for example, generation of a signal by the transmission signal generating section 402 and assignment of a signal by the mapping section 403. Further, the control section 401 controls reception processing of a signal by the received signal processing section 404 and measurement of a signal by the measuring section 405.

The control section 401 acquires a DL control channel and DL data channel transmitted from the radio base station 10 from the received signal processing unit 404. Specifically, the control section 401 controls the transmission/reception section 203 and received signal processing section 404 so as to subject the DL control channel to blind decoding to detect DCI to be transmitted in the subframe and/or sDCI to be transmitted in the shortened TTI and receive the DL data channel based on the DCI and/or sDCI.

The control section 401 controls transmission of channel state information (CSI) generated based on a DL reference signal (for example, CSI-RS). Further, the control section 401 may control transmission of retransmission control information (for example, HARQ-ACK and the like) to be transmitted on the UL control channel or UL data channel based on results of determining whether or not retransmission control is necessary for the DL data channel, and the like.

The control section 401 controls so as to perform transmission by selecting one of A-CSI and P-CSI in the case where transmission timing of A-CSI and transmission timing of P-CSI overlap in the same shortened TTI at least in the same cell. For example, the control section 401 is capable of dropping one of A-CSI and P-CSI in the case where transmission timing of A-CSI and transmission timing of P-CSI overlap in the same subframe (see FIG. 6 to FIG. 8).

Further, the control section 401 is capable of controlling so as to transmit A-CSI and P-CSI respectively in the case where transmission timing of A-CSI and transmission timing of P-CSI are set in different shortened TTIs in the same subframe (see FIG. 11, FIG. 13). Furthermore, the control section 401 may also determine which of A-CSI and P-CSI to transmit based on reception timing or decoding timing of a reporting request for A-CSI (see FIG. 10, FIG. 14).

Further, the control section 401 may control so as to transmit A-CSI and P-CSI respectively in the case where transmission timing of A-CSI and transmission timing of P-CSI overlap in the same TTI in different cells (see FIG. 15).

The transmission signal generating section 402 generates a UL signal (UL control channel, UL data channel, UL reference signal and the like) and outputs to the mapping section 403 based on instructions from the control section 401. It is possible to configure the transmission signal generating section 402 by a signal generator, signal generating circuit, or signal generating apparatus, which are described based on the common recognition in the technical field according to the present invention.

The transmission signal generating section 402 generates a UL data channel based on instructions from the control section 401. For example, the transmission signal generating section 402 is instructed to generate a UL data channel by the control section 401 in the case where a UL grant is included in the DL control channel notified from the radio base station 10. In the case where a CSI reporting request (CSI triggering) is included in the UL grant, the transmission signal generating section 402 is instructed to generate CSI by the control section 401.

The mapping section 403 maps the UL signal generated in the transmission signal generating section 402 to a radio resource and outputs to the transmission/reception section 203 based on instructions from the control section 401. In the case where a CSI reporting request is included in downlink control information (for example, UL grant), the mapping section 403 maps CSI to an uplink shared channel (for example, PUSCH). It is possible to configure the mapping section 403 by a mapper, mapping circuit, or mapping apparatus, which are described based on the common recognition in the technical field according to the present invention.

The received signal processing section 404 performs reception processing (for example, demapping, demodulation, decoding and the like) for the received signal input from the transmission/reception section 203. Here, the received signal is, for example, a DL signal (DL control channel, DL data channel, DL reference signal and the like) transmitted from the radio base station 10. It is possible to configure the received signal processing section 404 by a signal processor, signal processing circuit, or signal processing apparatus, which are described based on the common recognition in the technical field according to the present invention. Further, the received signal processing section 404 is capable of configuring the reception section according to the present invention.

The received signal processing section 404 subjects the DL control channel for scheduling transmission and/or reception of the DL data channel to blind decoding based on instructions of the control section 401, and performs reception processing of the DL data channel based on the DCI. Further, the received signal processing section 404 estimates channel gain based on DM-RS or CRS and demodulates the DL data channel based on the estimated channel gain.

The received signal processing section 404 outputs information decoded by reception processing to the control section 401. The received signal processing section 404 outputs, for example, broadcast information, system information, RRC signaling, DCI and the like to the control section 401. The received signal processing section 404 may output decoding results of data to the control section 401. Further, the received signal processing section 404 outputs a received signal and signal after reception processing to the measuring section 405.

The measuring section 405 performs measurement concerning the received signal. For example, the measuring section 405 measures the channel state based on a reference signal for channel state measurement (CSI-RS) transmitted from the radio base station. Further, the measuring section 405 may measure received power of a received signal (for example, RSRP), DL received quality (for example, RSRQ) and the like. Measurement results may be output to the control section 401. It is possible to configure the measuring section 405 by a measurer, measuring circuit, or measuring apparatus, which are described based on the common recognition in the technical field according to the present invention.

### <Hardware configuration>

In addition, the block diagram used for description of the above-mentioned Embodiment shows blocks in units of functions. These function blocks (constituent sections) are actualized by an arbitrary combination of hardware and/or software. Further, the actualization method of each function block is not limited in particular. In other words, each function block may be actualized by one apparatus coupled physically and/or logically, or may be actualized by a plurality of apparatuses by directly and/or indirectly connecting (for example, by wired and/or wireless connection) two or more apparatuses separated physically and/or logically.

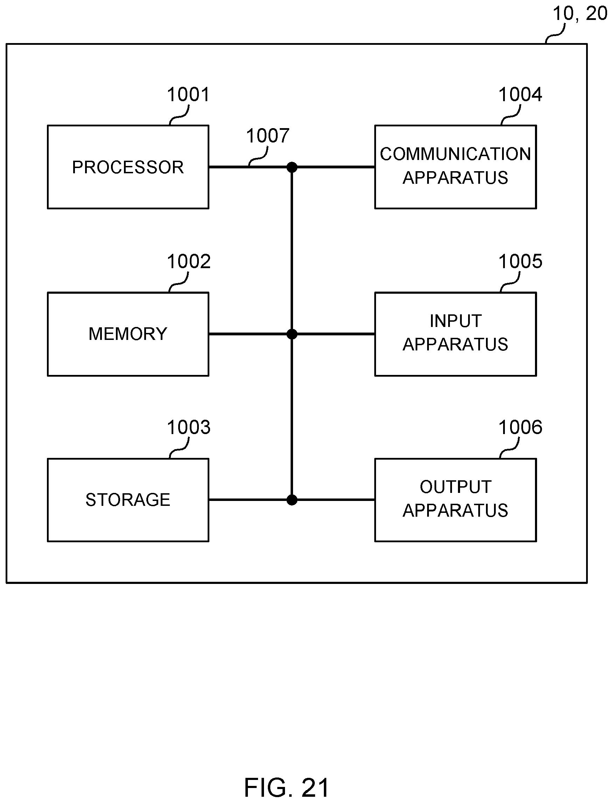

For example, a radio base station, user terminal and the like in one Embodiment of the present invention may function as a computer for performing processing of the radio communication method of the present invention. FIG. 21 is a diagram showing one example of a hardware configuration of the radio base station and a user terminal according to one Embodiment of the present invention. The above-mentioned radio base station 10 and user terminal 20 may be configured physically as a computer apparatus including a processor 1001, memory 1002, storage 1003, communication apparatus 1004, input apparatus 1005, output apparatus 1006, bus 1007 and the like.

In addition, in the description below, it is possible to read the word "apparatus" as circuit, device, unit and the like. The hardware configuration of the radio base station 10 and user terminal 20 may be configured so as to include one or a plurality of apparatuses shown schematically, or may be configured so as not to include part of apparatuses.

For example, only one processor 1001 is shown schematically, but there may be a plurality of processors. Further, processing may be performed by one processor, or processing may be performed by one or more processors concurrently, sequentially, or by another method. In addition, the processor 1001 may be implemented by one or more chips.

Each function in the radio base station 10 and user terminal 20 is actualized by, for example, reading predetermined software (program) onto hardware such as the processor 1001 and memory 1002, and the processor 1001 performing operation to control communication by the communication apparatus 1004 and read and/or write of data in the memory 1002 and storage 1003.

The processor 1001 controls, for example, the entire computer by running the operating system. The processor 1001 may be configured by a central processing unit (CPU) including an interface with peripheral apparatuses, control apparatus, operation apparatus, register and the like. For example, the above-mentioned baseband signal processing unit 104 (204), call processing unit 105 and the like may be actualized by the processor 1001.

Further, the processor 1001 reads programs (program codes), software modules, data and the like from the storage 1003 and/or communication apparatus 1004 onto the memory 1002 and performs various kinds of processing in accordance therewith. As the programs, programs for causing the computer to perform at least part of the operation described in the above-mentioned Embodiment are used. For example, the control section 401 of the user terminal 20 may be stored in the memory 1002 and actualized by a control program that runs on the processor 1001, and other function blocks may also be actualized similarly.

The memory 1002 is a computer readable storage medium and may be configured by at least one of, for example, ROM (Read Only Memory), EPROM (Erasable Programmable ROM), EEPROM (Electrically EPROM), RAM (Random Access Memory), and other proper storage media. The memory 1002 may be referred to as a register, cache, maim memory (main storage apparatus) and the like. The memory 1002 is capable of saving programs (program codes), software modules and the like, which are executable to perform the radio communication method according to one Embodiment of the present invention.

The storage 1003 is a computer readable storage medium and may be configured by at least one of, for example, a flexible disc, floppy (Registered Trademark) disc, magneto-optical disc (for example, compact disc (CD-ROM (Compact Disc ROM) and the like)), digital versatile disc, Blu-ray (Registered Trademark) disc, removable disc, hard disk drive, smart card, flash memory device (for example, card, stick, key drive), magnetic stripe, database, server, and other proper storage media. The storage 1003 may be referred to as an auxiliary storage apparatus.

The communication apparatus 1004 is hardware (transmission/reception device) for performing communication between computers via a wired and/or wireless network and is also referred to as, for example, a network device, network controller, network card, communication module and the like. The communication apparatus 1004 may be configured by including a high-frequency switch, duplexer, filter, frequency synthesizer and the like for actualizing, for example, Frequency Division Duplex (FDD) and/or Time Division Duplex (TDD). For example, the above-mentioned transmission/reception antenna 101 (201), amplifying section 102 (202), transmission/reception section 103 (203), transmission path interface 106 and the like may be actualized by the communication apparatus 1004.

The input apparatus 1005 is an input device (for example, keyboard, mouse, microphone, switch, button, sensor and the like) for receiving an input from the outside. The output apparatus 1006 is an output device (for example, display, speaker, LED (Light Emitting Diode) lamp and the like) for producing an output to the outside. The input apparatus 1005 and output apparatus 1006 may have an integrated configuration (for example, touch panel).

Further, each apparatus such as the processor 1001 and memory 1002 is connected by the bus 1007 for communicating information. The bus 1007 may be configured by a single bus, or may be configured by buses different between apparatuses.

Further, the radio base station 10 and user terminal 20 may be configured by including hardware such as a microprocessor, digital signal processor (DSP), ASIC (Application Specific Integrated Circuit), PLD (Programmable Logic Device), and FPGA (Field Programmable Gate Array), and part or all of each function block may be actualized by the hardware. For example, the processor 1001 may be implemented by at least one piece of the hardware.

### (Modification)

In addition, the term described in the Description and/or the term necessary to understand the Description may be replaced with a term having the same or similar meaning. For example, channel and/or symbol may be signal (signaling). Further, signal may be message. Reference signal may be referred to as RS (Reference Signal) as an abbreviation and may also be referred to as pilot, pilot signal and the like depending on the standard to be applied. Further, component carrier (CC) may be referred to as cell, frequency carrier, carrier frequency and the like.

Furthermore, the radio frame may be configured by one or a plurality of periods of time (frames) in the time domain. The one or plurality of periods of time (frames) configuring the radio frame may also be referred to as subframe. Further, the subframe may be configured by one or a plurality of slots in the time domain. Furthermore, the slot may be configured by one or a plurality of symbols (OFDM (Orthogonal Frequency Division Multiplexing) symbols, SC-FDMA (Single Carrier Frequency Division Multiple Access) symbols and the like).

Each of the radio frame, subframe, slot, and symbol represents the time unit at the time of transmitting a signal. For the radio frame, subframe, slot, and symbol, other names corresponding thereto respectively may be used. For example, one subframe may be referred to as transmission time interval (TTI), or a plurality of contiguous subframes may be referred to as TTI, or one slot may be referred to as TTI. In other words, the subframe and TTI may be a subframe (1 ms) in existing LTE, or period of time (for example, 1 to 13 symbols) shorter than 1 ms, or may be period of time longer than 1 ms.

Here, the TTI refers to the minimum time unit of scheduling in radio communication. For example, in the LTE system, the radio base station performs scheduling to assign a radio resource (frequency bandwidth, transmission power and the like that each user terminal is capable of using) to each user terminal in units of TTIs. In addition, the definition of TTI is not limited to this. The TTI may be the transmission time unit of a data packet (transport block) subjected to channel coding, or the processing unit of scheduling, link adaptation and the like.

The TTI having a time length of 1 ms may be referred to as an normal TTI (TTI in LTE Rel. 8-12), normal TTI, long TTI, normal subframe, normal subframe, or long subframe and the like. The TTI shorter than the normal TTI may be referred to as a shortened TTI, short TTI, shortened subframe, or short subframe and the like.

The resource block (RB) is the resource assignment unit of the time domain and frequency domain and may include one or a plurality of contiguous subcarriers in the frequency domain. Further, the RB may include one or a plurality of symbols in the time domain and may be one slot long, one subframe long, or one TTI long. Each of one TTI and one subframe may be configured by one or a plurality of resource blocks respectively. In addition, the RB may be referred to as a physical resource block (PRB), PRB pair, RB pair and the like.

Further, the resource block may be configured by one or a plurality of resource elements (REs). For example, one RE may be the radio resource domain of one subcarrier and one symbol.

In addition, the structures of the above-mentioned radio frame, subframe, slot, symbol and the like are merely exemplary. For example, it is possible to change the configuration such as the number of subframes included in the radio frame, number of slots included in the subframe, numbers of symbols and RBs included in the slot, number of subcarriers included in the RB, number of symbols within the TTI, symbol length, cyclic prefix (CP) length and the like in various manners.

Further, information, parameters and the like described in the Description may be represented by absolute values, may be represented by relative values from a predetermined value, or may be represented by another corresponding piece of information. For example, the radio resource may be one specified by a predetermined index. Further, mathematical expressions using these parameters may be different from those explicitly disclosed in the Description.

In the Description, names used for parameters and the like are not limitative in any respect. For example, it is possible to identify various channels (PUCCH (Physical Uplink Control Channel), PDCCH (Physical Downlink Control Channel) and the like) and information elements by every proper name, and therefore, various names assigned to these various channels and information elements are not limitative in any respect.

Information, signals and the like described in the Description may be represented by using one of various different techniques. For example, data, instruction, command, information, signal, bit, symbol, chip and the like that may be referred to across the above-mentioned entire description may be represented by voltage, electric current, electromagnetic wave, magnetic field or magnetic particle, light field or photon, or any combination thereof.

Further, information, signal and the like may be output from the higher layer to the lower layer and/or from the lower layer to the higher layer. Information, signal and the like may be input and output via a plurality of network nodes.

Input and output information, signal and the like may be saved in a particular place (for example, memory), or may be managed in a management table. Information, signal and the like to be input and output may be overwritten, updated, or postscript may be added thereto. Output information, signal and the like may be deleted. Input information, signal and the like may be transmitted to another apparatus.

Notification of information is not limited to the Aspects/Embodiments described in the Description and may be performed by another method. For example, notification of information may be performed by physical layer signaling (for example, Downlink Control Information (DCI), Uplink Control Information (UCI)), higher layer signaling (for example, Radio Resource Control (RRC) signaling, broadcast information (Master Information Block (MIB), System Information Block (SIB) and the like), Medium Access Control (MAC) signaling), another signal, or combination thereof.

In addition, physical layer signaling may be referred to as L1/L2 (Layer 1/ Layer 2) control information (L1/L2 control signal), L1 control information (L1 control signal) and the like. Further, RRC signaling may be referred to as an RRC message and for example, may be an RRC connection setup (RRCConnectionSetup) message, RRC connection reconfiguration (RRCConnectionReconfiguraion) message and the like. Furthermore, MAC signaling may be notified, for example, by a MAC control element (MAC CE (Control Element)).

Further, notification of predetermined information (for example, notification of "being X") is not limited to that performed explicitly and may be performed implicitly (for example, by not performing notification of the predetermined information or by notification of another piece of information).

Determination may be performed by a value (0 or 1) represented by one bit, may be performed by a Boolean value represented by true or false, or may be performed by comparison with a numerical value (for example, comparison with a predetermined value).

Irrespective of whether software is referred to as software, firmware, middleware, microcode, hardware description language, or another name, software should be interpreted widely so as to mean an instruction, instruction set, code, code segment, program code, program, subprogram, software module, application, software application, software package, routine, subroutine, object, executable file, execution thread, procedure, function and the like.

Further, software, instruction, information and the like may be transmitted and received via transmission media. For example, in the case software is transmitted from a web site, server, or another remote source by using the wired techniques (coaxial cable, Optical fiber cable, twist pair, Digital Subscriber Line (DSL) and the like) and/or wireless techniques (infrared, microwave and the like), these wired techniques and/or wireless techniques are included within the definition of the transmission media.

The terms "system" and "network" used in the Description are used interchangeably.

In the Description, the terms "base station (BS)", "radio base station", "eNB", "cell", "sector", "cell group", "carrier", and "component carrier" may be used interchangeably. The base station may be referred to by terms such as a fixed station, NodeB, eNodeB (eNB), access point, transmission point, reception point, femto-cell, and small cell in some cases.

The base station is capable of accommodating one or a plurality of cells (also referred to as sectors) (for example, three cells). In the case where the base station accommodates a plurality of cells, it is possible to divide the entire coverage area of the base station into a plurality of smaller areas and each of smaller areas is also capable of providing communication services by a base station subsystem (for example, small base station (RRH: Remote Radio Head) for indoor use). The term "cell" or "sector" refers to part or all of the coverage area of the base station and/or base station subsystem for performing communication services in this coverage.

In the Description, the terms "mobile station (MS)", "user terminal", "user equipment (UE)", and "terminal" may be used interchangeably. The base station may be referred to by terms such as a fixed station, NodeB, eNodeB (eNB), access point, transmission point, reception point, femto-cell, and small cell in some cases.

Depending on a person skilled in the art, the mobile station may be referred to by terms such as a subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, and client, or by some other proper terms in some cases.

Further, the radio base station in the Description may be read as user terminal. For example, each Aspect/Embodiment of the present invention may be applied to a configuration in which communication between a radio base station and user terminal is replaced with communication between a plurality of user terminals (D2D: Device-to-Device). In this case, a configuration may be made where the user terminal 20 has the functions that the above-mentioned radio base station 10 has. Further, the terms "uplink" and "downlink" may be read as "side". For example, uplink channel may be read as side channel.

Similarly, the user terminal in the Description may be read as radio base station. In this case, a configuration may be made where the radio base station 10 has the functions that the above-mentioned user terminal 20 has.

In the Description, the particular operation that is assumed to be performed by the base station is performed by an upper node thereof as the case may be. It is obvious that various kinds of operation performed for communication with a terminal in a network configured by one or a plurality of network nodes having a base station may be performed by the base station, one or more network nodes other than the base station (for example, Mobility Management Entity (MME), Serving-Gateway (S-GW) and the like are considered, but not limited to those), or combination thereof.

Each Aspect/Embodiment described in the Description may be used alone, in combination, or may be used by switching accompanying execution. Further, the order of the processing procedure, sequence, flowchart and the like of each Aspect/Embodiment described in the Description may be changed unless it is inconsistent. For example, the method described in the Description presents elements of various steps in illustrative orders and the orders are not limited to the presented particular orders.

Each Aspect/Embodiment described in the Description may be applied to systems and/or the next-generation systems enhanced based on these, which use LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR (New Radio), NX (New radio access), FX (Future generation radio access), GSM (Registered Trademark) (Global System for Mobile communications), CDMA 2000, UMB (Ultra Mobile Broadband), IEEE 802.11 (Wi-Fi (Registered Trademark)), IEEE 802.16 (WiMAX (Registered Trademark)), IEEE 802.20, UWB (Ultra-WideBand)), Bluetooth (Registered Trademark), and another proper radio communication method.

The description such as "based on" used in the Description does not mean "based on only" unless stated particularly. In other words, the description "based on" means both "based on only" and "based on at least".

Any reference to elements using names such as "first" and "second" used in the Description is not intended to generally limit the quantity or order of those elements. These names may be used in the Description as a convenient method of distinguishing between two or more elements. Accordingly, reference to the first and second elements does not mean that only the two elements may be adopted or the first element needs to precede the second element in a certain manner.

The term "determining" used in the Description includes various kinds of operation in some cases. For example, "determining" may be regarded as "determining" calculating, computing, processing, deriving, investigating, looking up (for example, looking up in table, database, or another data structure), ascertaining and the like. Further, "determining" may be regarded as "determining" receiving (for example, receiving information), transmitting (for example, transmitting information), input, output, accessing (for example, accessing data in memory) and the like. Furthermore, "determining" may be regarded as "determining" resolving, selecting, choosing, establishing, comparing and the like. In other words, "determining" may be regarded as "determining" some operation.

The terms "connected" and "coupled" used in the Description, or all modifications thereof mean all direct or indirect connections or couplings between two or more elements and may include existence of one or more intermediate elements between two "connected" or "coupled" elements. Coupling or connection between elements may be physical, logical, or combination thereof. In the case where these terms are used in the Description, it is possible to consider that two elements are "connected" or "coupled" with each other by using one or more electric wires, cables and/or printed electric connections, and as several non-limiting and non-comprehensive examples, by using electromagnetic energy, such as electromagnetic energy having wavelengths in the radio frequency domain, microwave domain, and optical (both visible light and invisible light) domain.

In the case where "including", "comprising", and modifications thereof are used in the Description or scope of the claims, these terms are intended to be comprehensive like the term "is provided with". Further, the term "or" used in the Description or scope of the claims is intended not to be exclusive OR.

As described above, the present invention is described in detail, but it is obvious to a person skilled in the art that the present invention is not limited to the Embodiment described in the Description. The present invention is capable of being carried into practice as modified and changed aspects without departing from the subject matter and scope of the present invention defined by the descriptions of the scope of the claims. Accordingly, the descriptions of the Description are intended for illustrative explanation, and do not have any restrictive meaning to the present invention.

The present application is based on Japanese Patent Application No. 2016-137918 filed on July 12, 2016, entire content of which is expressly incorporated by reference herein.

## Claims

1. A user terminal for communicating with a cell at least using a shortened TTI whose period of time is shorter than a subframe, comprising:
a transmission section that performs transmission of aperiodic channel state information using the shortened TTI and transmission of periodic channel state information using the shortened TTI and/or subframe; and
a control section that controls transmission by selecting one of the aperiodic channel state information and the periodic channel state information when transmission timing of the aperiodic channel state information and transmission timing of the periodic channel state information overlap in a same shortened TTI at least in a same cell.

2. The user terminal according to claim 1, wherein the control section drops one of the aperiodic channel state information and the periodic channel state information when the transmission timing of the aperiodic channel state information and the transmission timing of the periodic channel state information overlap in a same subframe.

3. The user terminal according to claim 1, wherein the control section controls so as to transmit the aperiodic channel state information and the periodic channel state information when the transmission timing of the aperiodic channel state information and the transmission timing of the periodic channel state information are set in different shortened TTIs in a same subframe.

4. The user terminal according to claim 2 or claim 3, wherein the control section determines which of the aperiodic channel state information and the periodic channel state information to transmit based on reception timing or decoding timing of a reporting request for the aperiodic channel state information.

5. The user terminal according to claim 1, wherein the control section controls so as to transmit the aperiodic channel state information and the periodic channel state information respectively when the transmission timing of the aperiodic channel state information and the transmission timing of the periodic channel state information overlap in the same shortened TTI in different cells.

6. A radio communication method for a user terminal communicating with a cell at least using a shortened TTI whose period of time is shorter than a subframe, the radio communication method comprising:
performing transmission of aperiodic channel state information using the shortened TTI and transmission of periodic channel state information using the shortened TTI and/or subframe; and
controlling transmission by selecting one of the aperiodic channel state information and the periodic channel state information when transmission timing of the aperiodic channel state information and transmission timing of the periodic channel state information overlap in a same shortened TTI at least in a same cell.
